# EUROPEAN PATENT APPLICATION

(11) **EP 1 557 772 A2**
(43) Date of publication of application: **27.07.2005**
(21) Application number: 05075933.1
(22) Date of filing: 05.12.2002
(51) Int. Cl.: G06F 17/30, G11B 27/031, G11B 17/00, H04N 5/76

(54) **Data searching and data editing**

(30) Priority: 05.12.2001 JP 2001371478
(62) Divisional of application: 02258397.5
(71) Applicant: SONY CORPORATION, Tokyo 141 (JP)
(72) Inventor: Ino, Yuji, Shinagawa-ku Tokyo 141 (JP)
(74) Representative: Pratt, Richard Wilson

(57) **Abstract**

A video data searching method and system and a video data editing method and system suitable for searching and editing of video data are disclosed. In order to search video data which are contents recorded in a video database, attendant information recorded incidentally to the video data is utilized as information representative of the contents, and if an attendant information search condition is given as a given condition, then an attendant information readout section reads in the attendant information from the video database, and an attendant information search section searches the attendant information based on the search condition to determine a pertaining attendant information. Thus, video data which make an object can be specified only from the attendant information without opening the video data. Then, a video data searching section fetches pertaining video data from the video database based on the attendant information.

## Description

### BACKGROUND OF THE INVENTION

This invention relates to a video data searching method, a video data searching system, a video data editing method and a video data editing system. Embodiments of the invention relate to a video data searching method, a video data searching system, a video data editing method and video data editing system for use for searching and editing video data, which are contents recorded in a recording medium and vary as the time passes, and data relating to the video data such as metadata recorded incidentally to the contents.

Information that is generated and varies every moment as the state of an event varies includes information which is fetched and recorded continuously in a time series.

As an example, in production of a broadcasting program, image and sound information of a material of a data gathering object, which varies in a time series, is recorded as a source material, and the recorded source material is edited to produce a broadcasting material having a time series configuration. The broadcasting material is also called contents, and one broadcasting material is produced as a video stream wherein a plurality of events each formed as a broadcasting unit are connected. Here, an event is one continuous broadcasting unit such as, for example, one commercial message.

Where the data gathering object is, for example, a sports game such as a baseball game, taken images and collected sound by a relay or a live coverage are not only recorded as a source material by a recording apparatus but also broadcast immediately on the real time basis as a broadcasting program by an live coverage. Further, similarly also in a concert or a relay of a stage, images and sound, which vary as the time passes, are recorded as a source material or broadcast on the real time basis as a live coverage. In relay broadcasting of a television program, of taken images and collected sound, principally images with sound are broadcast, but in relay recording of television broadcasting, images and sound are recorded. On the other hand, in a radio program, sound is broadcast.

A source material recorded in such a manner as described above is subsequently subject to an editing operation in order to produce a broadcasting material (contents). However, since a source material normally is live images and sound for several hours and is recorded continuously, they do not have any delimiter based on the contents. Meanwhile, since editing working is an operation of extracting a particular portion with attention paid to contents of the source material, confirmation of contents of individual portions, which compose the source material, is required inevitably. However, since the source material has no limiter as described above, it cannot be avoided to carry out an inefficient operation of confirming contents while the entire source material is successively reproduced.

Therefore, conventionally a recording person grasps a variation of the situation, which occurs in a relay or in a live coverage, and writes a memorandum about the variation of the situation by hand writing every time so as to be left, and later, the pertaining portion of the source material is searched for and extracted manually based on the memorandum to perform an editing operation.

For example, where a memorandum during a relay of a baseball game is "Opening game of Giants vs. Swallows. Swallows are at bat and one out in the bottom of the eighth inning, the batter Kobayakawa hit three consecutive home runs from the pitcher Saito." and an editor tries to take this scene into a highlight program, the editor first manually searches a source material, in which images on the spot are recorded, to detect the portion of the bottom of the eighth inning and then manually advances the source material to the portion of one out to reproduce the noticeable scene of the home run by the batter Kobayakawa.

Alternatively, during a relay of a play of a ballet, where a memorandum "During the play of Coppelia, Coppelius played by Mr. Komaki of the Komaki Ballet Organization fell from the second floor of the set. Not injured. Mr. Komaki in the impersonation appeared on a wing of the stage and apologized for the clumsy happening to the audiences. He announced to resume the play from the czardas. The play was resumed as announced." is written and the editor determines that it is necessary to cut the scene, the editor searches and deletes the portion of the first czardas.

In this manner, conventionally preparations for reference information are made by a hand-written memorandum and the reference information is used at a site of editing.

However, for such preparations for reference information as described above, it is necessary for a recording person to write a memorandum for each scene while an image to be recorded such as, for example, a sports game is watched. Therefore, the recording person is obliged to carry out complicated operation, and the efficiency in operation is low. Further, there is the possibility that such a trouble as loss of the memorandum may occur before an editing operation is started.

Further, in editing operation, it is necessary for an editor to perform an operation of searching for a head position or an editing point in accordance with the memoranda from an image material for a long period of time. Therefore, complicated operation for a long period of time is required and the efficiency is low.
Furthermore, in order to search and access image materials in the past, it is necessary to additionally provide a memorandum such as a script. Therefore, management of the accumulated materials is complicated, and they cannot be utilized efficiently.

### SUMMARY OF THE INVENTION

An embodiment of the present invention seeks to provide a video data searching method and a video data searching system as well as a video data editing method and a video data editing system wherein a head search and determination of an editing point of a video data material can be performed efficiently to achieve improvement in productivity of editing operation and improvement in searchability of and accessibility to a video data material.

Another embodiment of the present invention seeks to provide a video data searching method and a video data searching system as well as a video data editing method and a video data editing system wherein information relating to editing including accumulated materials and reference information can be managed reasonably.
According to an aspect of the present invention, there is provided a video data searching method for searching video data which are data of an image with sound or at least one of the image and the sound which change as the time passes, the image being at least one of a moving picture and a still picture, including the steps of reading out, using a video database wherein the video data, attendant information to the video data which changes in parallel to the video data, and matching information for matching the video data and the attendant information with each other are recorded on a data recording medium, and presenting the attendant information; and referring, when one of the presented attendant information is designated, to the matching information based on the designated attendant information to specify the pertaining video data on the video database.

The video data searching method is carried out by a video data searching system for searching video data which are data of an image with sound or at least one of the image and the sound which change as the time passes, the image being at least one of a moving picture and a still picture, including a video database section wherein the video data, attendant information to the video data which changes in parallel to the video data, and matching information for matching the video data and the attendant information with each other are recorded on a data recording medium; attendant information readout means for reading out the attendant information from the video database section and presenting the read out attendant information; and attendant information processing means for referring, when one of the presented attendant information is designated, to the matching information based on the designated attendant information to specify the pertaining video data on the video database section.

With the video data searching method and the video data searching system, the attendant information recorded in the video database or the video database section is presented first, and then if one of the attendant information is designated, then the matching information is referred to based on the designated attendant information to specify the pertaining video data. The attendant information changes in parallel to the video data and has a correlation to the video data. Therefore, when attendant information is designated first, narrowing down by pre-selection of those video data, which make an object, is performed readily only with the attendant information without opening the video data themselves. Consequently, improvement in the search efficiency is achieved.

According to another aspect of the present invention, there is provided a video data searching method for searching video data which are data of an image with sound or at least one of the image and the sound which change as the time passes, the image being at least one of a moving picture and a still picture, including the steps of searching, using a video database wherein the video data, attendant information to the video data which changes in parallel to the video data, and matching information for matching the video data and the attendant information with each other are recorded on a data recording medium, the attendant information in accordance with a given search condition to determine a pertaining attendant information; and referring to the matching information based on the determined attendant information to specify the pertaining video data on the video database.

The video data searching method is carried out by a video data searching system for searching video data which are data of an image with sound or at least one of the image and the sound which change as the time passes, the image being at least one of a moving picture and a still picture, including a video database section wherein the video data, attendant information to the video data which changes in parallel to the video data, and matching information for matching the video data and the attendant information with each other are recorded on a data recording medium; attendant information searching means for searching the attendant information in accordance with a given search condition to determine a pertaining attendant information; and video data searching means for referring to the matching information based on the determined attendant information to search the video database section to specify the pertaining video data.

With the video data searching method and the video data searching system, if a search condition for searching the attendant information recorded in the video database or the video database section is received as a given condition, then the attendant information is searched based on the search condition to determine a pertaining attendant information, and then the matching information is referred to based on the determined attendant information to specify the pertaining video data. The attendant information changes in parallel to the video data and has a correlation to the video data. Therefore, by narrowing down the attendant information with a search condition, those video data, which make an object, can be narrowed down by pre-selection, and besides, in the pre-selection, the video data themselves need not be searched. Consequently, the search efficiency is improved.

According to a further aspect of the present invention, there is provided a video data editing method for editing video data which are data of an image with sound or at least one of the image and the sound which change as the time passes, the image being at least one of a moving picture and a still picture, including the steps of extracting, using a video database wherein the video data, attendant information to the video data which changes in parallel to the video data, and matching information for matching the video data and the attendant information with each other are recorded on a data recording medium, when an arbitrary one of the attendant information recorded in the video database is designated, the pertaining video data from the video database based on the designated attendant information and the matching information and presenting the extracted video data; and executing, when a cutout point for the presented video data is designated, at least one of a process of cutting out the video data to form a video clip at a point of time when the cutout point is designated, an other process of recording the cutout point as clip information into the video database or an other data recording medium, and a further process of supplying the cutout point as clip information to the outside.

The video data editing method is carried out by a video data editing system for editing video data which are data of an image with sound or at least one of the image and the sound which change as the time passes, the image being at least one of a moving picture and a still picture, including a video database section wherein the video data, attendant information to the video data which changes in parallel to the video data, and matching information for matching the video data and the attendant information with each other are recorded on a data recording medium; pre-stage processing means for extracting, when an arbitrary one of the attendant information recorded in the video database section is designated, the pertaining video data from the video database section based on the designated attendant information and the matching information and presenting the extracted video data; and editing means for executing, when a cutout point for the presented video data is designated, at least one of a process of cutting out the video data to form a video clip at a point of time when the cutout point is designated, an other process of recording the cutout point as clip information into the video database section or an other data recording medium, and a further process of supplying the cutout point as clip information to the outside.

With the video data editing method and the video data editing system, if an arbitrary one of the attendant information recorded in the video database or the video database section is designated, then the matching information is referred to based on the designated attendant information to extract and present the pertaining video data. Although pre-selection of the attendant information is performed in this manner by that attendant information is designated first, since the attendant information changes in parallel to the video data and has a correlation to the video data, narrowing down by pre-selection of the video data for the attendant information is performed readily without opening the video data themselves.

Then, if a cutout point for the presented video data is designated, then a video clip is formed by such cutout and the cutout point is recorded or supplied as clip information to the outside. Consequently, a video clip, which is an object of later editing working, can be produced readily. Further, upon editing working at any later timing, a video clip can be produced readily and rapidly using the stored slip information without the necessity for designation of a cutout point for the video data again. As a result, the editing operation can be performed totally efficiently.

According to a still further aspect of the present invention, there is provided a video data editing method for editing video data which are data of an image with sound or at least one of the image and the sound which change as the time passes, the image being at least one of a moving picture and a still picture, including the steps of executing, using a video database wherein the video data, attendant information to the video data which changes in parallel to the video data, and matching information for matching the video data and the attendant information with each other are recorded on a data recording medium, pre-stage selection based on a given search condition from within the attendant information recorded in the video database to determine an object attendant information; extracting the pertaining video data from the video database based on the determined attendant information and the matching information and presenting the extracted video data; and executing, when a cutout point for the presented video data is designated, one of a process of cutting out the video data to form a video clip at a point of time when the cutout point is designated, an other process of recording the cutout point as clip information into the video database or an other data recording medium, and a further process of supplying the cutout point as clip information to the outside.

The video data editing method is carried out by a video data editing system for editing video data which are data of an image with sound or at least one of the image and the sound which change as the time passes, the image being at least one of a moving picture and a still picture, including a video database section wherein the video data, attendant information to the video data which changes in parallel to the video data, and matching information for matching the video data and the attendant information with each other are recorded on a data recording medium; pre-stage processing means for executing pre-stage selection based on a given search condition from within the attendant information recorded in the video database section to determine an object attendant information, extracting the pertaining video data from the video database section based on the determined attendant information and the matching information and presenting the extracted video data; and editing means for executing, when a cutout point for the presented video data is designated, one of a process of cutting out the video data to form a video clip at a point of time when the cutout point is designated, an other process of recording the cutout point as clip information into the video database section or an other data recording medium, and a further process of supplying the cutout point as clip information to the outside.

With the video data editing method and the video data editing system, pre-stage selection based on a given search condition is performed for the attendant information recorded in the video database or the video database section to determine an object one of attendant information, and then the matching information is referred to based on the determined attendant information to extract and present the pertaining video data. Since the attendant information changes in parallel to the video data and has a correlation to the video data, where narrowing down by pre-selection of the video data is performed first by a search for attendant information which satisfies a given search condition in this manner, narrowing down of those video data which make an object can be performed readily only with the attendant information without opening the video data themselves.

Then, if a cutout point for the presented video data is designated, then a video clip is formed by such cutout and the cutout point is recorded or supplied as clip information to the outside. Consequently, a video clip, which is an object of later editing working, can be produced readily. Further, upon editing working at any later timing, a video clip can be produced readily and rapidly using the stored slip information without the necessity for designation of a cutout point for the video data again. As a result, the editing operation can be performed totally efficiently.

Embodiments of present invention described hereinafter achieves the following substances and advantages.
1. Real-time attendant information (such as score data with time), which is generated as the time passes with a material (video data) of a recording object, or attendant information formed off-line is used as guide information for search or editing of the recorded material.
2. First time information, which functions as a time code of a recording material, and second time information, which represents a flow of attendant information, are matched with each other to allow search and reference of the recorded material.
3. Improvement in searchability and accessibility of an image by archives wherein a recorded material and attendant information are matched with each other is achieved.
4. Improvement in searchability and accessibility of stored materials is achieved to allow reasonable management of the stored materials.
5. Augmentation in efficiency in head search and determination of an editing point of a recorded material is achieved to improve the productivity in an editing operation.
6. Augmentation in efficiency in production of a broadcasting material is achieved by utilizing real-time event information such as, for example, score data in a sports game as means for searching or editing.

The event information may include a sports game of the baseball, soccer, and marathon, a fixed spot location program of a car race or the like, a variety program, a concert, or the like. Further, associated use of the video data searching system or the video data editing system with an existing apparatus such as a VTR, a Sports Coder, or a speed gun is permitted.

### BRIEF DESCRIPTION OF THE DRAWINGS

A better understanding of the invention will be gained by reference to the following illustrative description, taken in connection with the accompanying drawings, in which:
FIG. 1 is a block diagram showing a video data searching system to which the present invention is applied;
FIG. 2 is a block diagram of a form of a video database of the video data searching system of FIG. 1;
FIG. 3 is a view illustrating an example of a configuration of a time management table shown in FIG. 2;
FIG. 4 is a view illustrating an example of a configuration of an attendant information table shown in FIG. 2;
FIG. 5 is a view illustrating an example of a configuration of a link table shown in FIG. 2;
FIG. 6 is a flow chart illustrating operation of the video data searching system of FIG. 1;
FIG. 7 is a flow chart illustrating operation of the video database of FIG. 2;
FIG. 8 is a block diagram of another form of the video database shown in FIG. 2 in which common time information is used;
FIG. 9 is a view illustrating a concept of the common time information used in the video database of FIG. 8;
FIG. 10 is a flow chart illustrating operation of the video database of FIG. 8;
FIG. 11 is a block diagram illustrating a concept of the video database shown in FIG. 2 upon recording of data into the video database;
FIG. 12 is a block diagram showing an example of an attendant information processing section shown in FIG. 11;
FIG. 13 is a block diagram showing an example of a material processing section shown in FIG. 11;
FIG. 14 is a block diagram illustrating a concept of the video database shown in FIG. 2 upon recording of data into the video-database;
FIG. 15 is a block diagram showing another video data searching system to which the present invention is applied;
FIG. 16 is a flow chart illustrating operation of the video data searching system of FIG. 15;
FIG. 17 is a block diagram showing a video data editing system to which the present invention is applied;
FIGS. 18 and 19 are flow charts illustrating operation of the video data editing system of FIG. 17;
FIG. 20 is a block diagram showing another video data editing system to which the present invention is applied;
FIG. 21 is a flow chart illustrating operation of the video data editing system of FIG. 20;
FIG. 22 is a block diagram showing a further video data editing system to which the present invention is applied;
FIG. 23 is a flow chart illustrating operation of the video data editing system of FIG. 22;
FIG. 24 is a view illustrating an example of order adapted type information by a numerical representation of score data;
FIG. 25 is a view illustrating an example of order adapted type information by an expanded numerical expression of score data; and
FIG. 26 is a view illustrating an example of guide information by order adapted type information by a numerical representation and significance adapted type information by a character representation.

### DETAILED DESCRIPTION OF THE PREFERRED EMBODIMENTS

In the following, preferred embodiments of the present invention are described in detail with reference to the accompanying drawings.

It is to be noted that several terms used in the present specification are defined as given below.

In particular, the term "image" is defined as "at least one of a moving picture and a still picture".

The term "video data" is defined as data including one of an image with sound, which changes as the time passes, an image, and sound. A typical example of video data is data of an image with sound in a relay of a game of some sports.

The term "attendant information" is defined as information that is generated or formed attendant to video data and changes as the time passes. A typical example of attendant information is score information recorded as a game of some sports proceeds.

Further, the term "presentation" is defined as presentation given as at least one of a screen display, a print, and a guide by voice.

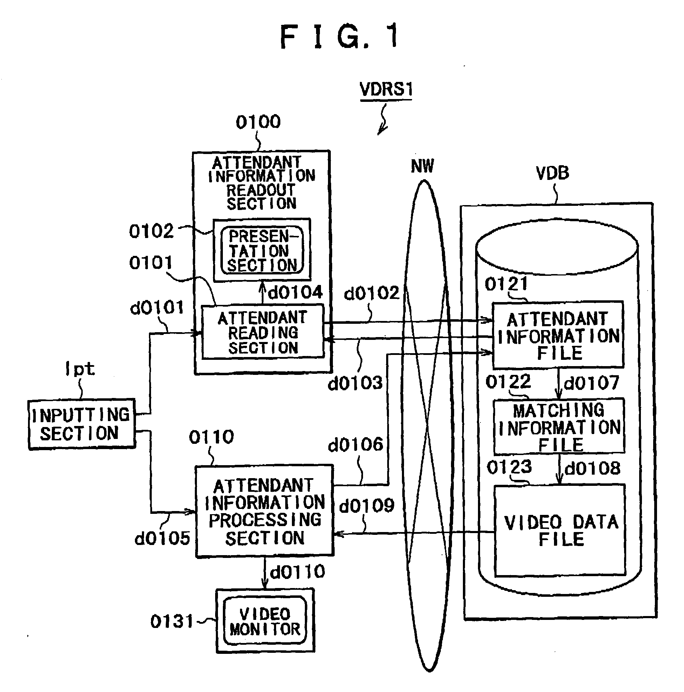

FIG. 1 shows a general configuration of a video data searching system to which the present invention is applied. Referring to FIG. 1, the video data searching system VDRS1 shown is formed as a computer system which includes an attendant information readout section 0100, an attendant information processing section 0110, a video monitor 0131, an inputting section Ipt, a communication network NW, and a video database VDB. More particularly, the video data searching system VDRS1 is formed as a computer system which includes a computer (for example, a work station or a personal computer) of a first system which in turn includes the attendant information readout section 0100, attendant information processing section 0110, video monitor 0131, and inputting section Ipt and further includes a controller not shown for controlling operation of the components of the first system computer; another computer (for example, a main frame) which accommodates a large capacity recording apparatus and forms the video database VDB; and the communication network NW for relaying data communication between the computers of the first and second systems.

Alternatively, a single computer may be used to implement functions of the components included in the first system computer and the video database VDB without using the communication network NW, In the following, description is given of the former computer system configuration.

The first system computer includes a bus for transmitting command data, video data, and other necessary data, a central processing unit (CPU) for executing various arithmetic operation processes, a presentation controller for managing video data, a graphic display for a GUI and so forth to be displayed on a display unit, a communication interface for controlling communication with an external apparatus through a communication network, an input device interface for processing input data from a keyboard, a mouse, a pointing device such as a pen and tablet, and other input devices, and an external interface, a read only memory (ROM) or/and a data recording apparatus such as a hard magnetic disk apparatus in or on which an operating system, some application software, and other necessary data are stored, a random access memory (RAM) for temporarily storing uploaded application software, data generated in the process of execution of the CPU and so forth, and other necessary elements. However, the components mentioned belong to a general computer configuration, and detailed description of them is omitted herein to avoid redundancy and complexity.

The attendant information readout section 0100 includes an attendant information reading section 0101 and a presentation section (monitor) 0102. The presentation section 0102 is formed from a display unit or a printing apparatus and adapted to present (display on a screen or print out) attendant information received as presentation data d0104 from the attendant information reading section 0101 as hereinafter described.

Meanwhile, the attendant information reading section 0101 and the attendant information processing section 0110 are prepared as computer programs. The computer programs are stored in the ROM or/and the hard magnetic disk apparatus or the like and read and executed by the CPU.

The attendant information reading section 0101 transmits, when it receives an attendant information reading instruction d0101 from the inputting section Ipt, an attendant information reading command d0102 to the video database VDB through the communication network NW, reads in attendant information d0103 extracted by the video database VDB through the communication network NW, and sends the attendant information d0103 as presentation data d0104 to the presentation section 0102.

The attendant information processing section 0110 transmits, when an attendant information designation d0105 is received from the inputting section Ipt, the attendant information designation d0105 as a designated attendant information d0106 to the video database VDB through the communication network NW, receives pertaining video data d0109 corresponding to the attendant information from the video database VDB through the communication network NW, and sends the video data d0109 as presentation video data d0110 to the video monitor 0131.

The inputting section Ipt includes, for example, a keyboard or/and a mouse and is operated by a user to generally input object data for construction of a database, input an instruction of a search condition when a data search is to be performed, or perform suitable designation, setting, and so forth. In the present embodiment, the inputting section Ipt inputs an attendant information reading instruction d0101 to the attendant information reading section 0101 or inputs an attendant information designation input d0105 to the attendant information processing section 0110.

The video monitor 0131 is formed typically from a cathode ray tube (CRT) apparatus or a liquid crystal display apparatus and presents (displays on a screen) presentation video data d0110 received from the attendant information processing section 0110 to the user.

The communication network NW is formed as a bidirectional broadband network, which may be a privately leased line, a public network, an Internet network, a CATV (cable television) network, a network formed from a combination of a satellite line and a public network. In this instance, a two ends points system by point-to-point or a directly coupled system, a packet network communication configuration by an open network or the like can be applied to the communication network NW.

Meanwhile, the video database VDB is formed as a computer of the second system and has a database operation function suitable for recording and handling particularly of large capacity data.

The video database VDB includes a video data file 0123 for recording and storing video data of contents, an attendant information file 0121 for recording and storing attendant information generated in parallel in a time series relationship to the contents, and a matching information file 0122 for recording and storing information which matches attendant information and video data with each other. The attendant information file 0121 allows collective extraction of attendant information stored therein.

When an attendant information reading command d0102 is received from the attendant information reading section 0101, the video database VDB reads out the stored attendant information collectively from the attendant information file 0121 and signals the read out attendant information as attendant information d0103 to the attendant information reading section 0101. Further, if designated attendant information d0106 is received from the attendant information processing section 0110, then the video database VDB refers to the attendant information file 0121, matching information file 0122, and video data file 0123 in this order based on the designated attendant information d0106 to specify video data corresponding to the designated attendant information d0106, and signals the video data as pertaining video data d0109 to the attendant information processing section 0110.

In the following, the "attendant information" is described.

The attendant information is time series information that is generated at such timing as that of appearance of an arbitrary noticeable scene of contents which vary as the time passes, and can indicate the contents concisely. Accordingly, the attendant information has a close relationship to time information. A representative example of the attendant information is event information, which is formed in an event such as a game of some sports, a drama, a concert, or score data produced in an event of a relay of a baseball game.

Further, the attendant information can be utilized as guide data that can guide the pertaining contents without the necessity to open the contents and can be utilized also as a "bookmark" or a "label" for specifying the pertaining contents within a stream of the contents.

While the attendant information has a close relationship to time information as can be clearly recognized from the foregoing description, where a combination of attendant information and time information or a combination of attendant information and recorded position (that is, address) information is represented as "metadata", the metadata can be recorded in a data recording medium in any of the following forms:
(a) Only metadata are recorded;
(b) Only video data are recorded; and
(c) Both of video data and metadata are recorded.

In the form (a), the data recording medium is sometimes formed as a removable data recording medium suitable for movement by itself or for transportation. For example, if a recording medium that can be carried readily as represented by a "memory stick" (commodity name) is applied, then searching and editing are executed using metadata recorded in the recording medium and including attendant data.

However, the data recording medium is not limited to a removable data recording medium. For example, if video data in a relay of a baseball game are transmitted from a baseball stadium through a transmission line and recorded by a database system of a broadcasting station while attendant information and matching information are recorded as metadata onto a non-removable HDD built in a personal computer temporarily set up in the baseball stadium, then when the personal computer is returned to the broadcasting station after the end of the relay, such utilization as to transfer the recorded metadata to the database system through a LAN or the like or to be accessed directly by an editing system through a LAN or the like can be carried out. Also it is possible to transfer the recorded metadata to the database system of the broadcasting station from the personal computer placed in the baseball stadium through a communication line after the end of the relay, or it is possible for the editing system to fetch the metadata directly from the personal computer to, for example, a HDD built in the editing system.

In the forms (b) and (c), from the necessity to record a stream of video data for a long period of time, a large capacity RAID system composed of a VTR (Video Tape Recorder) or a plurality of VTRs, which use a removable magnetic tape of a large recording capacity, or a train of a plurality of magnetic disks rather than a removable data recording medium of a comparatively small recording capacity such as a memory card or a removable magnetic disk medium is applied. Accordingly, the present invention utilizes such media of a large recording capacity to perform searching and editing.

In the following, time information is described.

Since the attendant information involves lapse of time and changes as the time passes as described hereinabove, it is possible to measure the time for each part of the attendant information and make the part match with the time information. In the present embodiment, the scale for the time measurement is referred to as "second time base". Further, the time measured based on the second time base is referred to as "second time information". In this manner, transition of attendant information is matched with second time information.

Meanwhile, video data, which are contents, involve lapse of time and change as the time elapses. Therefore, it is possible to measure the time for each part of the video data and match the part with time information. In the present embodiment, the scale of the time measurement is referred to as "first time base". Further, the time measured based on the first time base is referred to as "first time information". Accordingly, transition of video data is matched with first time information.

Since the first time base is set arbitrarily, for example, like local time at the time of a game of the football or the golf, upon such setting, the first time base is not subject to any restriction from the second time base.

Similarly, since the second time base is set arbitrarily independently of the first time base, it is not restricted by the first time base (for example, local time at the time of a game) at all.

Further, when video data are to be recorded onto a recording medium, they are matched with information of a position at which it is recorded, that is, the address. Accordingly, with a recorded material (contents), that is, with recorded video data, information of the position at which the video data is recorded, that is, the address, corresponds further, a time code at the point of time of recording of the video data is recorded as first time information. One form of the time code is a real-time time code, and the time at that time, for example, the standard time, is recorded, for example, together with the year, month, and day. Alternatively, an elapsed period of time from the origin of time determined at that time is recorded.

However, upon editing, it is impossible to suppose contents of a pertaining portion of video data only from the recorded time code. The information is insufficient only with the time code. However, it is inefficient to carry out editing operation while all of the recorded video data are watched. Therefore, in the present invention, the attendant information is utilized as intermediate information with which contents can be supposed readily. In other words, the attendant information is utilized as measures for searching or editing operation.

On the other hand, for example, when attendant information is produced in the stage of arrangement after recording, a time code recorded in a matched relationship with attendant information is used as the second time information based on the second time base defined in the present embodiment. However, the time code is time in the stage of arrangement, and accordingly, the first time base and the second time base are generally different from each other.

Further, where a time code of local time is stamped or a representation by a time base set arbitrarily is given in an event broadcast on the real time base from the West European block, North America, South America, or the like, an event distributed on the real time basis through a communication line, or the like, the time code or the representation serves as the first time base. Here, if the time at present is set to the second time base, then an estrangement occurs and the first time base and the second time base do not coincide with each other. Therefore, a link table for matching the first time base and the second time base with each other is prepared.

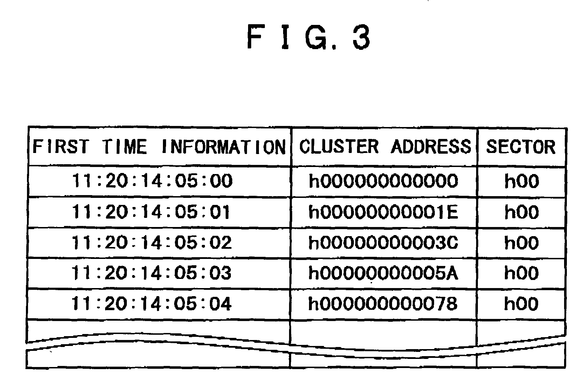

As a countermeasure for matching such attendant information, time information, and recorded positions as described above, such tables as shown in FIGS. 3 to 5 are used.

FIG. 3 illustrates an example of a configuration of a "time management table", which represents table type information, wherein the first time information and the addresses are matched with each other. This time management table is applied to a disk-type recording medium and includes records in fields of the first time information, cluster address, and sector address. In the example shown, the first time information of the second record is recorded as
11:20:14:05:01,
the cluster address (six bytes) is recorded as
h00000000001E
in hexadecimal notation, and the sector address (one byte) is recorded as
h00
in hexadecimal notation.

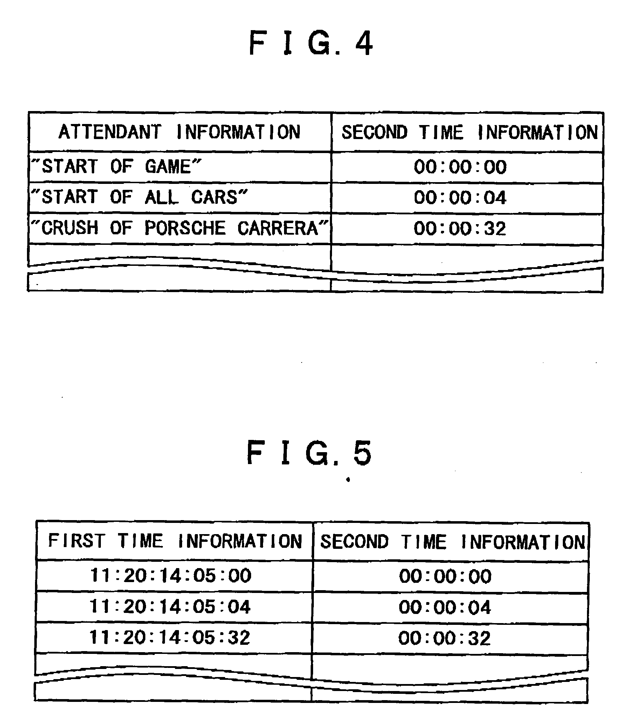

FIG. 4 shows an example of a configuration of an "attendant information table", which represents table type information, wherein attendant information and second time information are matched with each other. This attendant information table includes records in fields of the attendant information and the second time information. In the example shown, the attendant information of the first record is recorded as
"start of game",
and the second time information corresponding to this is represented as an elapsed period of time and recorded as
00:00:00.

FIG. 5 shows an example of a configuration of a "link table", which represents table type information, wherein first time information and second time information are matched with each other. This link table includes records in fields of the first time information and the second time information. In the example shown, the first time information of the third record is recorded as
11:20:14:05:32,
and the second time information corresponding to this is represented as an elapsed period of time and is recorded as
00:00:32.

Also it is possible to make the time information based on a common time base. In particular, the second time base is set commonly to the first time base. For example, in a live coverage of a marathon game, broadcasting on the real time basis and recording of video data are performed simultaneously, and attendant information is formed on the real time basis. In such an instance, the time bases become common, and the time information also becomes common time information.

A first example of the common time base is the Greenwich Mean Time universally used in the world and may additionally include the year, month, and day. A second example is an elapsed period of time from a starting point of time determined among those involved. Also this makes common time information among those involved.

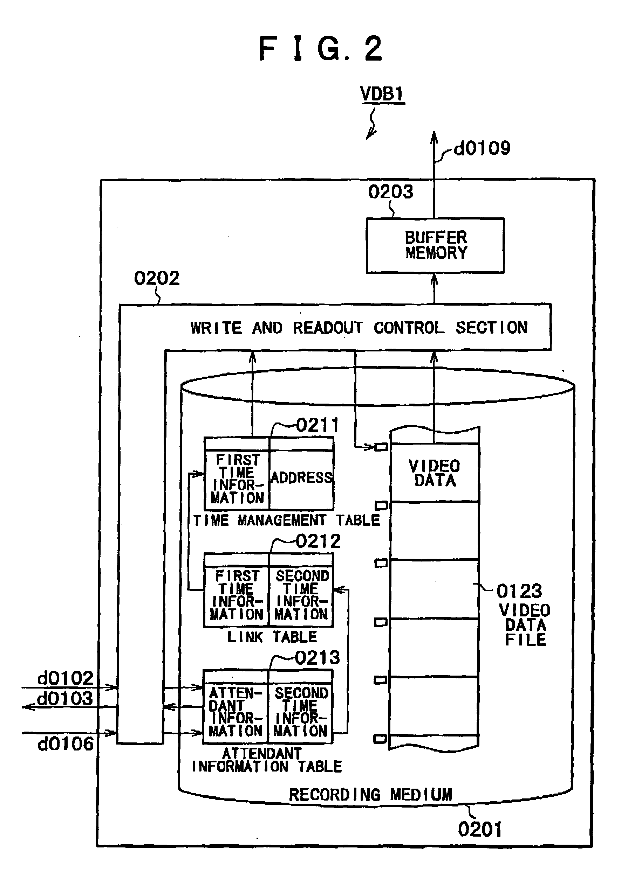

A block configuration of a video database VDB1 to which the attendant information table, time management table, and link table described above are applied is shown in FIG. 2.

Referring to FIG. 2, the video database VDB1 includes a recording medium 0201 for recording and storing video data and tables, a write and readout control section 0202 for controlling writing into and reading out from the recording medium 0201, and a buffer memory 0203 for video data to be read out. The write and readout control section 0202 is prepared as a computer program. The recording medium 0201 may be a disk type recording medium such as a hard magnetic disk, a magneto-optical disk, or an optical disk, a tape type recording medium such as a video cassette tape, a semiconductor memory, or/and a combination of a plurality of such recording media as mentioned here.

The write and readout control section 0202 further controls the buffer memory 0203 to manage buffering of data based on the difference between a transmission rate of the video data d0109 and a readout rate from the recording medium 0201.

In each region of the recording medium 0201, video data are successively recorded into segments of the video data file 0123, and an attendant information table 0213 is recorded in the attendant information file 0121 while a time management table 0211 and a link table 0212 are recorded in the matching information file 0122.

If an attendant information reading command d0102 is received, then the write and readout control section 0202 reads out attendant information from the attendant information table 0213 and edits and signals attendant information d0103 based on the extracted attendant information. On the other hand, if a designated attendant information d0106 is received, then the write and readout control section 0202 refers to the attendant information table 0213 to obtain second time information corresponding to the attendant information as reference data d0107 (refer to FIG. 1), then refers to the link table 0212 to obtain first time information corresponding to the second time information as reference data d0108 (refer to FIG. 1), and then refers to the time management table 0211 to specify pertaining video data d0109 based on an address corresponding to the first time information, whereafter the write and readout control section 0202 signals the video data d0109.

where the recording medium 0201 is formed from a disk type medium such as a hard magnetic disk, a magneto-optical disk, or an optical disk, the following systems are available for recording positions and management of time information, and the present embodiment is ready for all of the systems.
(a) Time information is recorded in the header of each region on a track in which video data are recorded. As an example, time information is recorded in a sub-header part provided in a sector, which is formed as a minimum recording management unit on a track. Four to eight bytes or so are prepared for the sub-header part.
(b) Time information is recorded in an independent item in each region on a track on which video data are recorded. As an example, a time information recording region is provided at the top of a data area of a sector such that time information is recorded therein. The time information in this instance is sometimes called bookmark.
(c) Time information is recorded in the form of a matching table within a management data recording region provided separately from a video stream region in which video data are recorded. As an example, a table of a form
wherein time information and absolute addresses (a cluster address and a sector address are recorded in the header part in each sector) on tracks are matched with each other is prepared separately and recorded into a management data recording area. Incidentally, where one sector is formed from 512 bytes and one cluster is formed from 64 sectors, the recording capacity per one cluster is 30 kbytes.

A table of a form wherein time information and frame numbers each formed from one or a plurality of clusters are matched with each other is sometimes prepared. Thus, a matching relationship such as "time information and a sector in a certain cluster" or "time information and a frame" is established in accordance with the recording form as described above. Here, a frame makes a basic unit for construction of each leaf of a moving picture and management is performed based on the total frame number.

On the other hand, recording of time information by a VTR that uses a tape type magnetic recording medium is performed by hierarchical recording of LTC recorded on a longitudinal track formed on a tape medium and VITC recorded on inclined tracks. Further, the present invention is adapted also to a configuration which stamps a recording starting position SOM on a tape recording medium and matches the recording starting position SOM with guide data (attendant information).

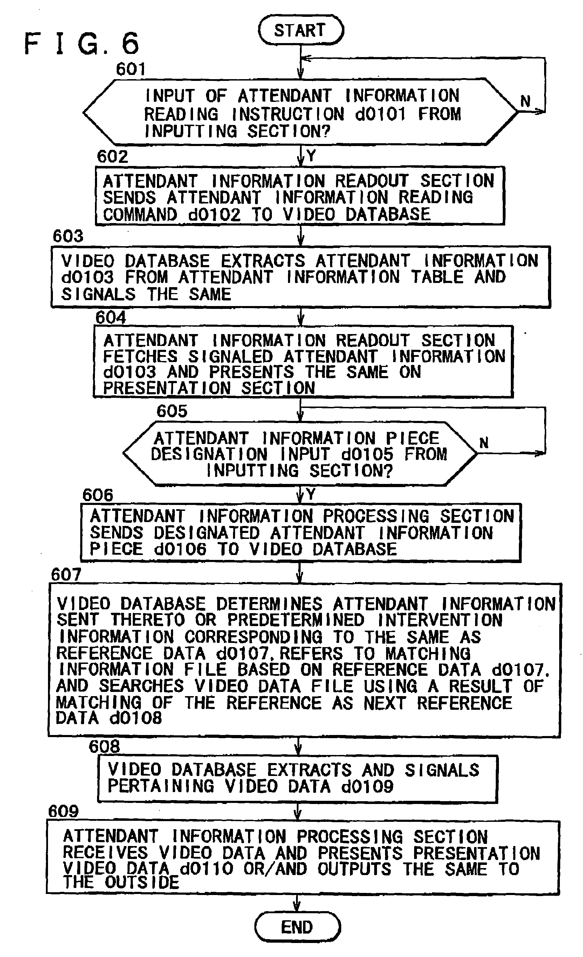

FIG. 6 is a flow chart of operation of the video data searching system VDRS1 shown in FIG. 1. In the following, the operation of the video data searching system VDRS1 is described with reference to FIG. 6.

At step 601, it is checked whether or not an attendant information reading instruction d0101 is inputted from the inputting section Ipt to the attendant information reading section 0101 of the attendant information readout section 0100. If it is discriminated that an attendant information reading instruction d0101 is inputted, then the processing advances to step 602, at which the attendant information reading section 0101 of the attendant information readout section 0100 sends an attendant information reading command d0102 to the video database VDB through the communication network NW.

At step 603, the video database VDB receiving the reading command d0102 extracts the attendant information d0103 from the attendant information table in the attendant information file 0121 and sends the attendant information d0103 to the attendant information reading section 0101 through the communication network NW. At step 604, the attendant information reading section 0101 of the attendant information readout section 0100 fetches the sent attendant information d0103 through the communication network Nw and presents the attendant information d0103 on the presentation section 0102.

Then at step 605, it is checked whether or not an attendant information designation input d0105 from the inputting section Ipt is received by the attendant information processing section 0110. If an attendant information designation input d0105 is received, then the processing advances to step 606, at which the attendant information processing section 0110 sends the designated attendant information d0106 to the video database VDB through the communication network NW.

At step 607, the video database VDB uses the designated attendant information d0106 received through the communication network NW or predetermined intervention information (for example, second time information described hereinabove) corresponding to the designated attendant information d0106 as reference data d0107 and refers to the matching information file 0122 based on the reference data d0107, and then uses a result of the correspondence as next reference data d0108 to search the video data file 0123.

At step 608, the video database VDB extracts the pertaining video data d0109 and signals the video data d0109 to the attendant information processing section 0110 through the communication network NW,

At step 609, the attendant information processing section 0110 receives the video data d0109 and presents the presentation video data d0110 on the screen of the video monitor 0131 or/and outputs and signals the presentation video data d0110 to the outside, thereby ending the task.

It is to be noted that, in any of the steps described above, pertaining data may be transmitted directly or through a private leased line without through the communication network NW.

In this manner, the video data searching system VDRS1 reads in attendant information, which changes in parallel and has a correlation to video data and carries information relating to contents of the video data, from the video database VDB and presents the attendant information. Then, when one of the attendant information is designated, the VERS 1 refers to matching information recorded in the video database VDB based on the designated attendant information to specify the pertaining video data. Consequently, narrowing of object video data by pre-selection can be performed readily based on attendant information without opening video data themselves. As a result, a search efficiency is improved.

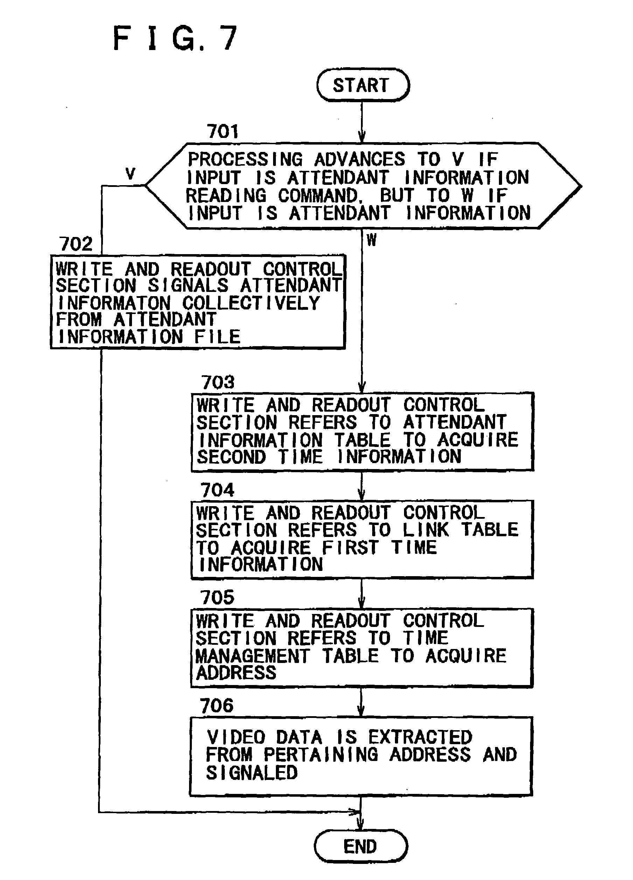

FIG. 7 is an operation flow chart when the video database VDB1 shown in FIG. 2 is applied to the video database VDB of the video data searching system VDRS1 of FIG. 1. In the following, the operation is described with reference to FIG. 7.

At step 701, the write and readout control section 0202 advances its processing to V (step 702) if the input is an attendant information reading command d0102, but to W (step 703) if the input is an attendant information d0106.

At step 702, the write and readout control section 0202 signals the attendant information d0103 collectively from the attendant information file 0121, thereby ending the task.

On the other hand, at step 703, the write and readout control section 0202 refers to the attendant information table 0213 to acquire second time information. Then at step 704, the write and readout control section 0202 refers to the link table 0212 to acquire first time information.

At step 705, the write and readout control section 0202 refers to the time management table 0211 to acquire an address.

At step 706, the write and readout control section 0202 extracts video data d0109 from the pertaining address of the video data file 0123 and signals the video data d0109, thereby ending the task.

In this manner, even if video data and attendant information are recorded with different time bases and with different time information from each other, pertaining video data can be specified by referring to the attendant information table 0213, link table 0212, and time management table 0211. Further, pertaining video data can be extracted readily and rapidly.

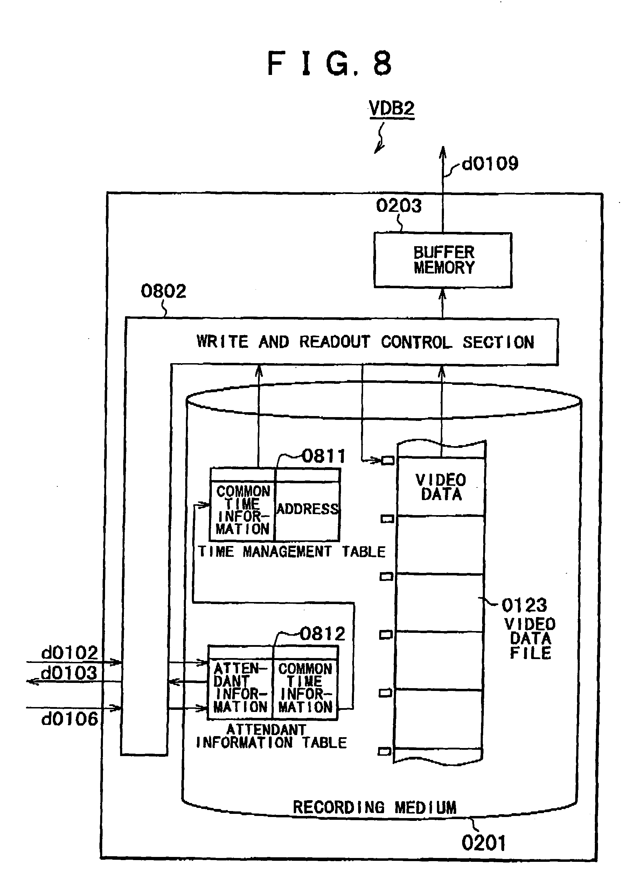

A block configuration of a video database VDB2 to which such common time information as described above is applied is shown in FIG. 8. It is to be noted that like elements to those of the video database VDB1 described hereinabove are denoted by like reference characters and overlapping description of them is omitted herein to avoid redundancy.

The video database VDB2 includes a recording medium 0201, a write and readout control section 0802, and a buffer memory 0203. The write and readout control section 0802 is prepared as a computer program and controls the buffer memory 0203 to manage buffering of data.

In different regions of the recording medium 0201, an attendant information table 0812 is recorded in the attendant information file 0121 and a time management table 0811 is recorded in the matching information file 0122, in addition to the video data file 0123. The attendant information table 0812 records "attendant information" vs. "common time information", and the time management table 0811 records "common time information" vs. "addresses". The addresses are matched with the video data.

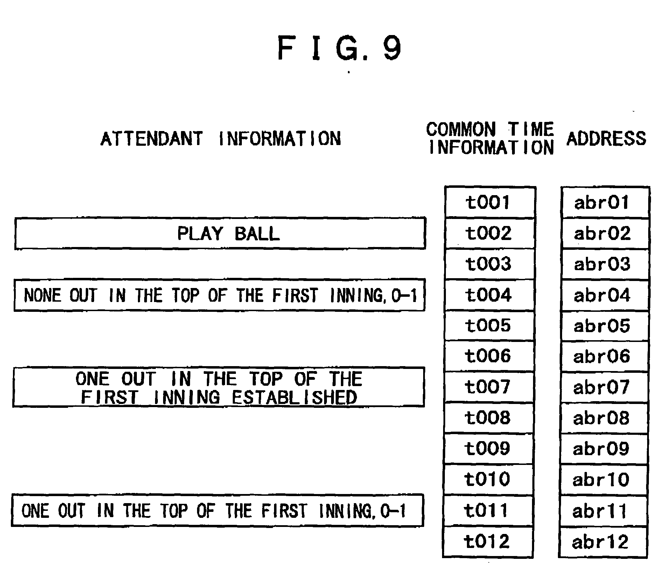

The write and readout control section 0802 reads out, when it receives an attendant information reading command d0102, the attendant information from the attendant information table 0812, forms attendant information d0103 from the extracted attendant information and signals the attendant information d0103. When a designated attendant information d0106 is received, the write and readout control section 0802 refers to the attendant information table 0812 and sets common time information corresponding to the attendant information to reference data d0107 (refer to FIG. 1), whereafter the write and readout control section 0802 refers to the time management table 0211, specifies pertaining video data d0109 based on an address corresponding to the common time information, and then signals the video data d0109. A concept of such common time information is illustrated in FIG. 9. The common time information and the media addresses illustrated in FIG. 9 are recorded and managed in the time management table 0811, and the attendant information and the common time information illustrated in FIG. 9 are recorded and managed in the attendant information table 0812. Further, at the media addresses, recorded materials (video data) not shown are recorded in a one-by-one corresponding relationship.

Accordingly, a recorded material (video data) can be accessed from attendant information through intervention of common time information.

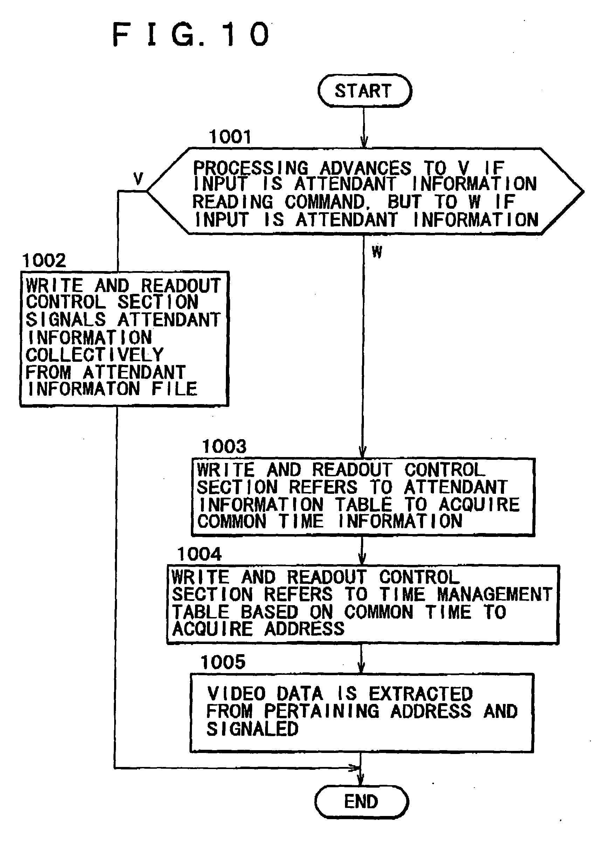

FIG. 10 is an operation flow chart when the video database VDB2 shown in FIG. 8 is applied to the video database VDB of the video data searching system VDRS1 of FIG. 1. In the following, the operation is described.

At step 1001, the write and readout control section 0802 advances its processing to V (step 1002) if the input is an attendant information reading command d0102 but to W (step 1003) if the input is an attendant information d0106.

At step 1002, the write and readout control section 0802 collectively signals the attendant information d0103 from the attendant information file 0121, thereby ending the task.

At step 1003, the write and readout control section 0802 refers to the attendant information table 0812 to acquire common time information.

At step 1004, the write and readout control section 0802 refers to the time management table 0811 based on the common time to acquire an address.

At step 1005, the write and readout control section 0802 extracts video data d0109 from the pertaining address of the video data file 0123 and signals the video data d0109, thereby ending the present task.

By referring first to the attendant information table 0812 based on attendant information and then to the time management table 0811 in this manner, video data corresponding to the attendant information can be specified readily and rapidly. Further, the pertaining video data can be extracted readily and rapidly.

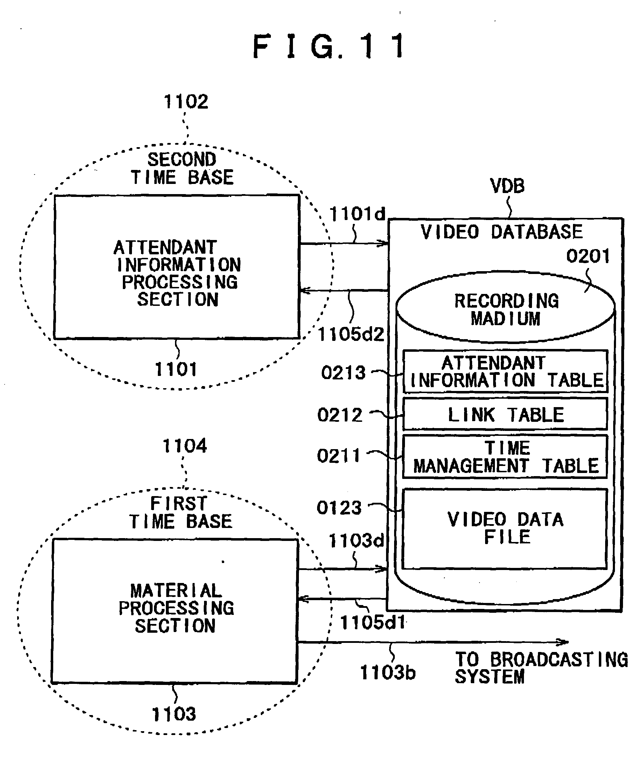

Now, an example of a manner wherein the video database VDB is constructed is described with reference to FIGS. 11 to 14.

Referring first to FIG. 11, in order to record data into the video database VDB, an attendant information processing section 1101 and a material processing section 1103 are connected to the video database VDB.

The material processing section 1103 performs a process of fetching contents of a material of a recording object and fetches a signal from an image pickup camera or the like. Accordingly, the material processing section 1103 makes a direct contact to a material generated (for example, a sports game).

The material processing section 1103 has a function of forming an object material into a video stream composed of video data and signaling the video stream, and signals a video stream 1103d suitable for recording to the video database VDB and signals another video stream 1103b suitable for broadcasting to a broadcasting system not shown. The video stream 1103d suitable for recording is recorded into the video data file 0123 of the video database VDB while the video stream 1103b suitable for broadcasting is broadcast as it is.

The first time information based on a first time base 1104 is set and managed by the material processing section 1103. Further, such first time information is applied as a code 1105d1 from the video database VDB to the material processing section 1103.

The attendant information processing section 1101 has a function of forming attendant information, which is generated or formed incidentally to a video stream, and signaling the attendant information, and signals attendant information 1101d to the video database VDB. Here, second time information is stamped to the attendant information 1101d based on a second time base 1102 by a timer built in the attendant information processing section 1101. Thus, when the attendant information 1101d is supplied to the video database VDB, the video database VDB uses the received second time information. Therefore, second time information is not produced in the video database VDB. Thereafter, the attendant information 1101d and the second time information are recorded in a matched relationship with each other. The information in this instance is recorded particularly as an attendant information table 0213.

On the other hand, otherwise if the attendant information 1101d is supplied to the video database VDB while second time information is not added to attendant information by the attendant information processing section 1101, then the video database VDB produces second time information based on the second time base 1102 by means of a timer built therein or the like and the second time information as a code 1105d2 is matched with the attendant information 1101d.

Although a plurality of configurations are available for production of the video database VDB depending upon processing of the first time information and the second time information, in any case, the video database VDB is prepared such that such video data and tables as described hereinabove are recorded therein.

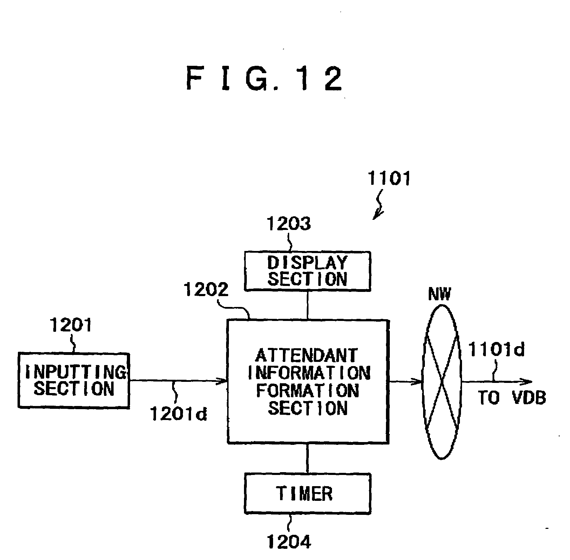

FIG. 12 is a block diagram showing a configuration of an example of the attendant information processing section. Referring to FIG. 12, the attendant information processing section 1101 includes an inputting section 1201 for accepting a manual input of data regarding an event of a recording object and supplying the inputted data as input data 1201d; an attendant information formation section 1202 for forming attendant information from the input data 1201d supplied thereto, stamping time based on the second time information from a built-in timer 1204 to the input data 1201d to form attendant information 1101d, and sending the attendant information 1101d to the video database VDB through the communication network NW; and a display section 1203 connected to the attendant information formation section 1202 for displaying the formed attendant information and so forth on a screen thereof. The attendant information processing section 1101 is composed principally of a computer, especially a personal computer of the notebook type, or the like which can be carried to a site readily, and the functioning blocks of the attendant information processing section 1101 such as the inputting section 1201, attendant information formation section 1202, and a communication controller not shown are prepared as programs which can be read and executed by the CPU.

The inputting section 1201 may be a keyboard apparatus, which is a peripheral apparatus of a computer, an apparatus of the keyboard type for exclusive use called Sports Coder conventionally used at a sports relaying site, a speed measuring instrument for exclusive use called speed gun, or the like. It is otherwise possible to configure the attendant information processing section 1101 such that the attendant information formation section 1202 does not have the function of forming second time information and the attendant information processing section 1101 sends attendant information 1101d that includes no second time information to the video database VDB.

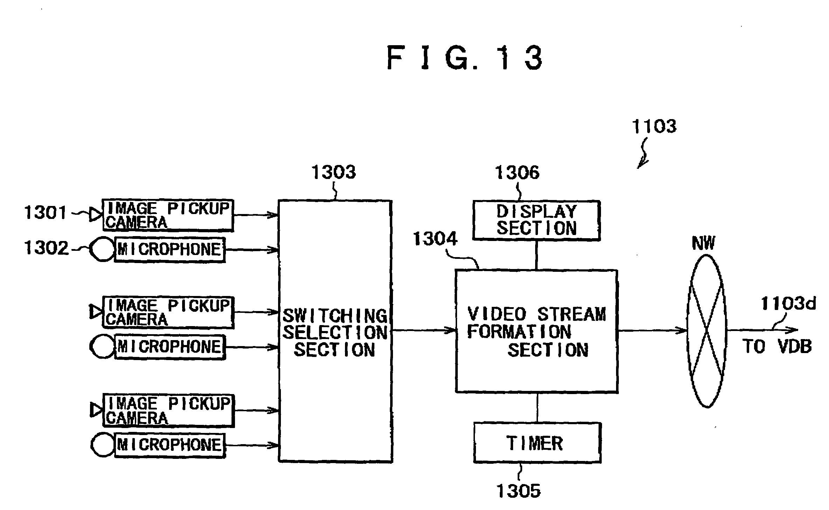

FIG. 13 is a block diagram showing a configuration of an example of the material processing section 1103. Referring to FIG. 13, the material processing section 1103 includes a switching selection section 1303 for selectively outputting one of video signals from a plurality of image pickup cameras (for example, image pickup cameras 1301) and audio signals from a plurality of microphones (for example, microphones 1302), a video stream formation section 1304 for performing data conversion and so forth to form a video stream, and a display section 1306 connected to the video stream formation section 1304 for providing a display on a screen. The material processing section 1103 further includes a timer 1305 which functions as a production block for producing first time information or common time information, and provides first time information or common time information to the video stream formation section 1304. Here, a switching device generally called switcher is applied to the switching selection section 1303.

The video stream formation section 1304 forms a video stream 1103d to be signaled to the video database VDB and a broadcasting video stream to be signaled to the broadcasting system not shown.

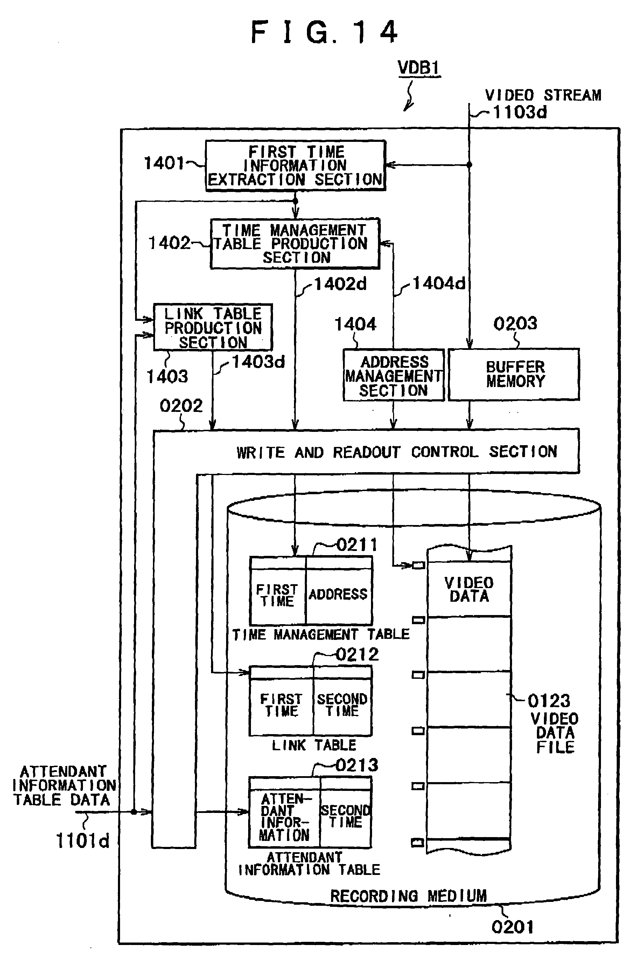

Referring now to FIG. 14, the video database VDB1 includes a recording medium 0201, a first time information extraction section 1401 for extracting first time information from a video stream 1103d and sending the first time information to a time management table production section 1402 and a link table production section 1403, an address management section 1404 for outputting recordable address data 1404d, a time management table production section 1402 for receiving the address data 1404d and the first time information to prepare time management table data 1402d wherein they are matched with each other and sending the time management table data 1402d to the write and readout control section 0202, a link table production section 1403 for receiving the first time information and extracting second time information from the attendant information table data 1101d to prepare link table data 1403d wherein they are matched with each other and then signaling the link table data 1403d to a write and readout control section 0202, and the write and readout control section 0202 for fetching the video stream 1103d through the buffer memory 0203 and recording video data into the video data file 0123, recording the time management table data 1402d into the time management table 0211, recording the link table data 1403d into the link table 0212 and recording the attendant information table data 1101d into the attendant information table 0213.

The video data file 0123, time management table 0211, link table 0212, and attendant information table 0213 are recorded and updated by the write and readout control section 0202. Recording and updating of the video database VDB are performed thereby.

It is to be noted that the foregoing configuration is a mere example, and naturally other various configurations and forms are possible.

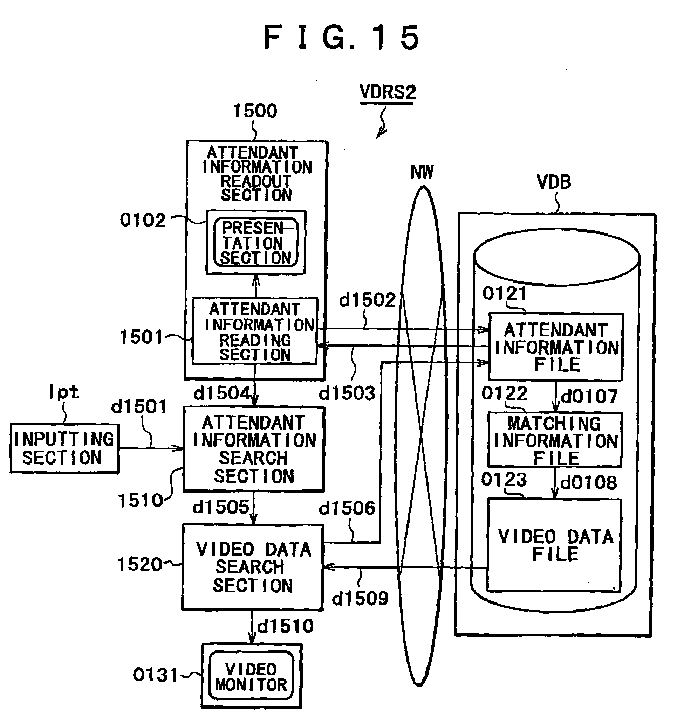

FIG. 15 shows another video data searching system to which the present invention is applied. The video data searching system of the present embodiment includes common components to those of the video data searching system described hereinabove with reference to FIG. 1, and overlapping description of such common components is omitted herein to avoid redundancy.

Referring to FIG. 15, the video data searching system VDRS2 according to the present embodiment is constructed as a computer system which includes an attendant information readout section 1500, an attendant information search section 1510, a video data search section 1520, a video monitor 0131, an inputting section Ipt, a communication network NW, and a video database VDB. More particularly, the video data searching system VDRS2 is formed as a computer system which includes a computer (for example, a work station or a personal computer) of a first system which in turn includes the attendant information readout section 1500, attendant information search section 1510, video data search section 1520, video monitor 0131, and inputting section Ipt and further includes a controller not shown for controlling operation of the components of the first system computer, another computer (for example, a main frame) which accommodates a large capacity recording apparatus and forms the video database VDB, and the communication network NW for relaying data communication between the computers of the first and second systems.

Alternatively, a single computer may be used to implement functions of the components included in the first system computer and the video database VDB without using the communication network NW. In the following, description is given of the former computer system configuration. Further, the computers of the first and second systems have substantially similar configurations to those in the preceding embodiment, and overlapping description of them is omitted herein to avoid redundancy.

The attendant information readout section 1500 includes an attendant information reading section 1501 and a presentation section (monitor) 0102. The attendant information reading section 1501, attendant information search section 1510, and video data search section 1520 are prepared as computer programs, and such computer programs are stored in a ROM, a hard magnetic disk apparatus, and/or the like and read and executed by the CPU.

The attendant information reading section 1501 operates, when a search condition d1501 is inputted from the inputting section Ipt to the attendant information search section 1510, in response to a trigger signal sent thereto from the controller not shown or the attendant information search section 1510 which detects the search condition d1501, and sends an reading command d1502 to the video database VDB through the communication network NW. Then, the attendant information reading section 1501 reads in an attendant information d1503 extracted by the video database VDB in response to the reading command d1502 through the communication network NW and supplies the attendant information d1503 as attendant information data d1504 to the attendant information search section 1510. The attendant information reading section 1501 may further send the attendant information data d1504 to the presentation section 0102 so that the attendant information data d1504 may be displayed on the screen or printed.

The attendant information search section 1510 searches the attendant information data d1504 supplied thereto based on the search condition d1501 given thereto to determine conforming attendant information and sends the determined attendant information as determined attendant information d1505 to the video data search section 1520.

The video data search section 1520 sends the determined attendant information d1505 as determined attendant information d1506 to the video database VDB through the communication network NW, receives pertaining video data d0109 corresponding to the attendant information through the communication network NW, and sends the video data d0109 as presentation video data d1510 to the video monitor 0131.

Meanwhile, the video database VDB is substantially similar to that in the first embodiment described hereinabove, and overlapping description thereof is omitted herein to avoid redundancy.

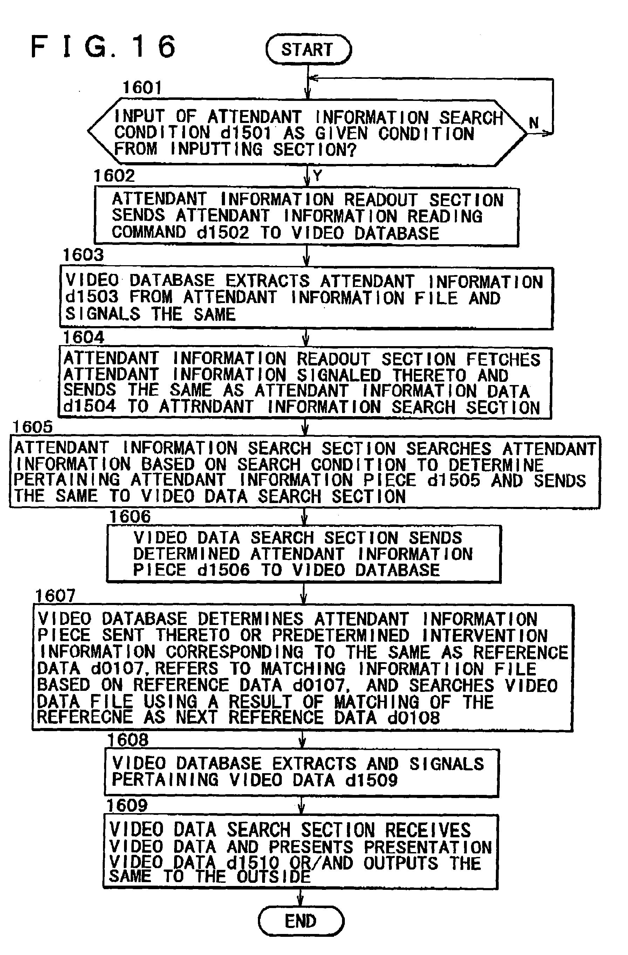

FIG. 16 is an operation flow chart of the video data searching system VDRS2 shown in FIG. 15. In the following, operation of the video data searching system VDRS2 is described with reference to FIG. 16.

At step 1601, if an attendant information search condition d1501 is inputted as a given condition from the inputting section Ipt, then this is detected by the controller not shown and conveyed to the attendant information readout section 1500 and the attendant information search section 1510.

At step 1602, the attendant information reading section 1501 of the attendant information readout section 1500 sends an attendant information reading command d1502 to the video database VDB.

At step 1603, the video database VDB extracts the attendant information d1503 from the attendant information file 0121 and sends the attendant information d1503 to the attendant information reading section 1501.

At step 1604, the attendant information reading section 1501 fetches the attendant information d1503 sent thereto from the video database VDB and sends the attendant information d1503 as data d1504 to the attendant information search section 1510.

At step 1605, the attendant information search section 1510 searches the attendant information based on the search condition d1501 to determine a pertaining attendant information d1505 and sends the attendant information d1505 to the video data search section 1520.

At step 1606, the video data search section 1520 receiving the attendant information d1505 sends it as determined attendant information d1506 to the video database VDB.

At step 1607, the video database VDB uses the attendant information d1506 transmitted thereto or predetermined intervention information not shown corresponding to the attendant information d1506 as reference data d0107, refers to the matching information file 0122 based on the reference data d0107, and searches the video data file 0123 using a result of matching of the reference as next reference data d0108.

At step 1608, the video database VDB extracts pertaining video data d1509 and extracts the video data d1509 to the video data search section 1520.

At step 1609, the video data search section 1520 receiving the video data d1509 forms it into presentation data d1510 and presents the presentation data d1510 on the screen of the video monitor 0131 or/and outputs the presentation data d1510 to the outside.

In the transmission processes of information described above, the information may be transmitted through the communication network NW. Further, the attendant information search section 1510 may search the attendant information file 0121 directly on the video database VDB.

With the video data searching system VDRS2 described above, if a search condition for a search of attendant information recorded in the video database VDB is given as a given condition, then attendant information is automatically searched based on the search condition to determine a pertaining attendant information, and then matching information is referred to based on the determined attendant information to determine pertaining video data. By narrowing down attendant information first with a search condition by pre-selection in this manner, object video data can be narrowed down without opening the video data themselves, and therefore, a search efficiency is improved significantly.

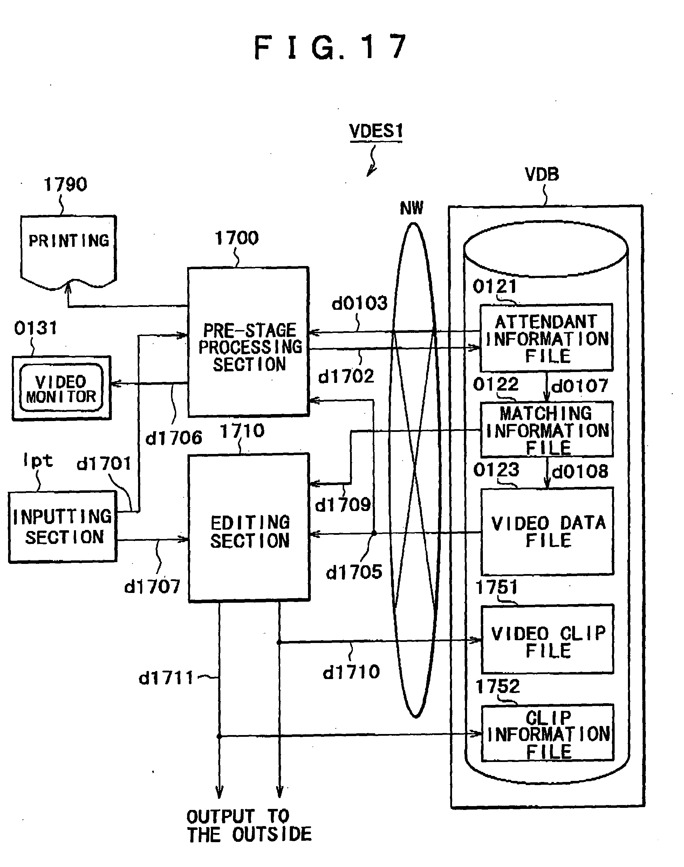

FIG. 17 shows a configuration of a video data editing system to which the present invention is applied. In the following, the configuration of the video data editing system is described with reference to FIG. 17. It is to be noted that the video data editing system includes several common components to those of the video data searching systems described hereinabove, and overlapping description of the common components is omitted herein to avoid redundancy.

The video data editing system VDES1 according to the present embodiment is formed as a computer system which includes a pre-stage processing section 1700, an editing section 1710, a video monitor 0131, an inputting section Ipt, a communication network NW, and a video database VDB. More particularly, the video data editing system VDES1 is formed as a computer system which includes a computer (for example, a work station or a personal computer) of a first system which in turn includes the pre-stage processing section 1700, editing section 1710, video monitor 0131, and inputting section Ipt and further includes a controller not shown for controlling operation of the components of the first system computer; another computer (for example, a main frame) which accommodates a large capacity recording apparatus and forms the video database VDB; and the communication network NW for relaying data communication between the computers of the first and second systems.

Alternatively, a single computer may be used to implement functions of the components included in the first system computer and the video database VDB without using the communication network NW. In the following, description is given of the former computer system configuration. Further, the computers of the first and second systems have substantially similar configurations to those in the preceding embodiments, and overlapping description of them is omitted herein to avoid redundancy.

Principal portions of the pre-stage processing section 1700 and editing section 1710 are prepared as computer programs, and such computer programs are stored in a ROM, a hard magnetic disk apparatus, or/and the like and read and executed by the CPU.

The pre-stage processing section 1700 has a printing function, and extracts, at an arbitrary point of time before an editing operation is started, attendant information d0103 recorded in the video database VDB from the video database VDB to make printing information 1790. Thereafter, if a designation d1701 of an arbitrary attendant information is inputted from the inputting section Ipt, then the pre-stage processing section 1700 sends designated attendant information attendant information d1702 to the video database VDB through the communication network NW, reads in pertaining video data d1705 extracted from the video database VDB through the communication network NW, and sends the video data d1705 as presentation video data d1706 to the video monitor 0131 so that the presentation video data d1706 is displayed on the screen of the video monitor 0131.

If a cutout point designation d1707 is inputted from the inputting section Ipt, then at the point of time, the editing section 1710 executes cutting out from the video data d1705 sent from the video database VDB to produce a video clip and simultaneously fetches time code data included in the video data d1705 or fetches recorded position data d1709 relating to the video data d1705 at the point of time from the matching information file 0122, video data file 0123, or attendant information file 0121 of the video database VDB to form clip information.

Further, the editing section 1710 sends the produced video clip d1710 to the video database VDB through the communication network NW so that the video clip d1710 is stored into a video clip file 1751, outputted to the outside, or/and else is subject to a succeeding editing work.

Furthermore, the editing section 1710 sends the formed clip information d1711 to the video database VDB through the communication network NW so that the clip information d1711 is stored into a clip information file 1752, outputted to the outside, or/and else is subject to a succeeding editing work.

On the other hand, the video database VDB is substantially similar to that in the foregoing embodiments except that it additionally includes the video clip file 1751 and the clip information file 1752, and overlapping description of the common configuration is omitted herein to avoid redundancy.

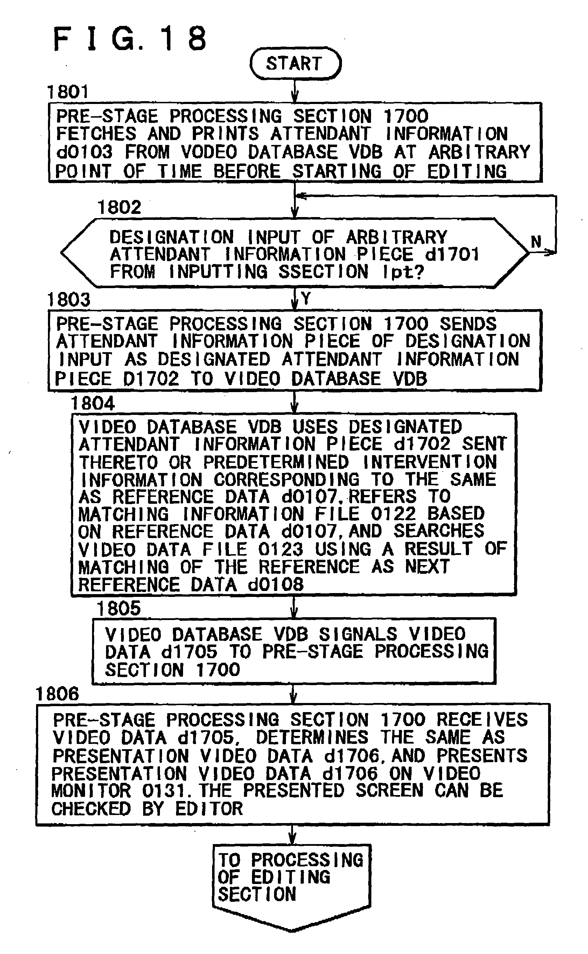

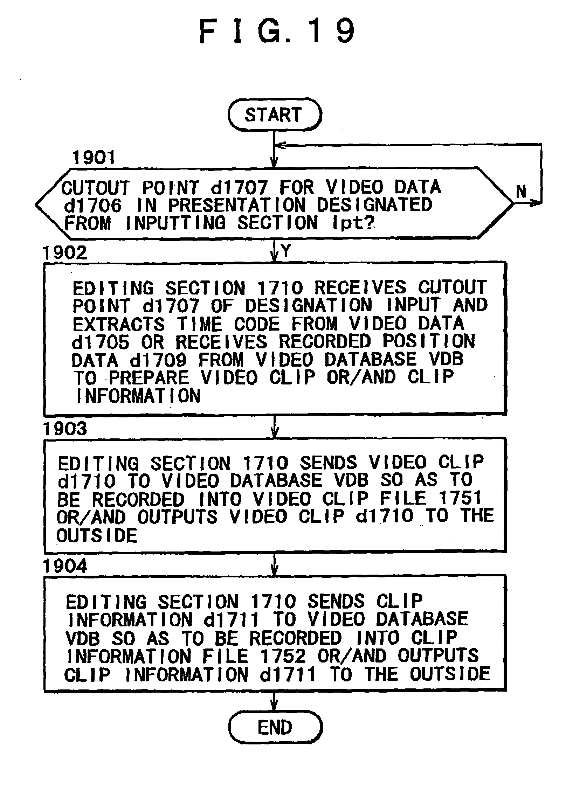

FIGS. 18 and 19 illustrate operation of the video data editing system VDES1 described above with reference to FIG. 17. In the following, operation of the video data editing system VDES1 is described with reference to FIGS. 18 and 19.

At step 1801, at an arbitrary point of time before editing is started, the pre-stage processing section 1700 fetches and prints the attendant information d0103 from the video database VDB.

At step 1802, if a designation of arbitrary attendant information d1701 is inputted from the inputting section Ipt, then the pre-stage processing section 1700 receives the designation input. At step 1803, the pre-stage processing section 1700 sends the attendant information designated by the input as an attendant information d1702 to the video database VDB.

Then at step 1804, the video database VDB uses the attendant information d1702 transmitted thereto or predetermined intervention information corresponding to the attendant information d1702 as reference data d0107, refers to the matching information file 0122 based on the reference data d0107, and uses a result of matching of the reference as next reference data d0108 to search the video data file 0123.

Then at step 1805, the video database VDB signals video data d1705, which is obtained by the search, to the pre-stage processing section 1700.

At step 1806, the pre-stage processing section 1700 receives the video data d1705 and presents it as presentation video data d1706 on the video monitor 0131. The presented screen can be checked by the editor. Thereafter, the processing advances to processing of the editing section.

Referring now to FIG. 19, if a designation of a cutout point d1707 for the video data d1706 being currently presented is inputted from the inputting section Ipt at step 1901, then at step 1902, the editing section 1710 receives the cutout point d1707 of the designation input and extracts a time code from the video data d1705 or receives the recorded position data d1709 from the video database VDB to prepare a video clip or/and clip information.

At step 1903, the editing section 1710 sends the video clip d1710 to the video database VDB so that the video clip d1710 is recorded into the video clip file 1751 or/and outputted to the outside.

At step 1904, the editing section 1710 sends the clip information d1711 to the video database VDB so that the clip information d1711 is recorded into the clip information file 1752 or/and outputted to the outside.

If the attendant information is disclosed and then arbitrary attendant information is designated in this manner, then matching information is referred to based on the designated attendant information to extract and present pertaining video data. Consequently, when attendant information is designated, object video data are narrowed down, and consequently, wasteful operation can be eliminated.

Besides, upon such narrowing down operation, the video data themselves need not be opened. Therefore, the narrowing down is effective.

Then, if a cutout point for the video data being currently presented is designated, then since formation of a video clip by such cutting out and recording or storage of the cutout point as clip information or supply of the cutout point to the outside is executed, a video clip, which is an object of later editing working, can be prepared readily. Further, upon editing working at a later arbitrary timing, a video clip can be prepared readily and rapidly using the stored clip information without designating a cutout point for the video data. As a result, the editing operation can be performed efficiently and the cost can be reduced.

Here, the editing operation is described more particularly.

A video stream is a continuous stream of video images and/or sound, and video data are obtained by converting the video stream into data. A video stream is recorded as video data arranged successively in a time series, and video data arranged in a time series are successively reproduced to form a video stream.

A video clip is formed by cutting out and extracting a video stream in the form of a continuous stream from an arbitrary portion to another arbitrary portion. The point at which the extraction is started is defined as an in point, and the point at which the extraction is ended is defined as an out point.

Accordingly, if an in point and an out point are used as clip information, then it is possible also to manage the video stream only with the clip information.
It is possible to record clip information together with or separately from video data and cut out pertaining video data based on the clip information later to produce a video clip at a desired arbitrary timing.

The in point and the out point are inputted and designated by an operator or an editor. However, the in point and the out point are sometimes not included in records of the attendant information table. However, even if, for example, in a baseball game, attendant information records a start of the top of the third inning and records a point of time with two out in the third inning, if a starting portion and an ending portion for a video clip are in intermediate scenes, the timings are different from the timing indicated by the attendant information. Accordingly, the addresses or the time codes of the video data corresponding to the in point and the out point are read from the time management table or read from addresses or time codes recorded on a recording face of a medium of the pertaining video data.

In an editing process later than formation of a clip, editing works such as joining, effect, and special working are involved. In the case of a special effect process, for a mosaic effect, a video image is divided into tile-like small pieces so that the image may look like a mosaic picture.

In a crop effect, a picture frame is reduced in size to cut out part of a video image, and the crop effect is called also cutout effect because part of a video image is cut out. Working for diffusion is performed for the left and right side positions as well as the upper and lower side positions of the picture frame and besides for the edges.

Three-dimensional image transform (3-Dimensional Transform) virtually transforms an image in a three-dimensional space. If the horizontal direction of the image is defined as X axis, the vertical direction is defined as Y axis, and the depthwise direction is defined as Z axis, then image transform of rotating the image around the X axis, Y axis, or Z axis or moving the image in the X axis, Y axis, or z axis direction is executed.

A trail effect (recursive effect) freezes, when an image is moved spatially, the image as still pictures at predetermined distances and leaves the frozen images as after-images.

Further, a wipe effect designated as a switching process represents a transition effect of switching an image displayed on a screen in such a manner that an old image displayed currently is wiped away with a new image.

In the present embodiment, it is possible to place, for example, when a cutout point is designated, information of applicable special works into the clip information so that the special works can be used in editing working performed later.

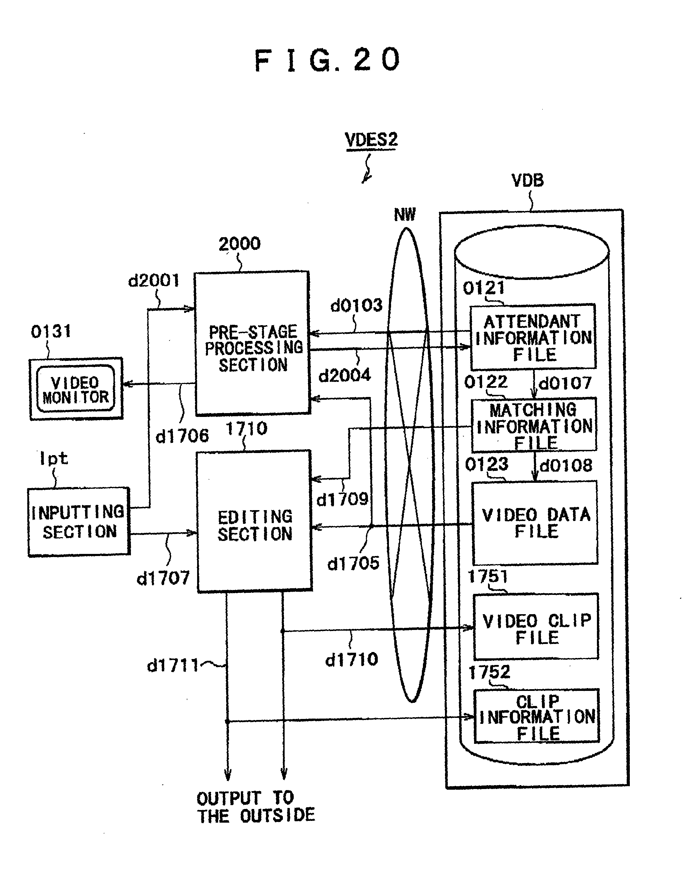

FIG. 20 shows another video data editing system to which the present invention is applied. Referring to FIG. 20, the video data editing system VDES2 according to the present embodiment is formed as a computer system which includes a pre-stage processing section 2000, an editing section 1710, a video monitor 0131, an inputting section Ipt, a communication network NW, and a video database VDB. More particularly, the video data editing system VDES2 is formed as a computer system which includes a computer (for example, a work station or a personal computer) of a first system which in turn includes the pre-stage processing section 2000, editing section 1710, video monitor 0131, and inputting section Ipt and further includes a controller not shown for controlling operation of the components of the first system computer; another computer (for example, a main frame) of a second system which accommodates a large capacity recording apparatus and forms the video database VDB; and the communication network NW for relaying data communication between the computers of the first and second systems.

Alternatively, a single computer may be used to implement functions of the components included in the first system computer and the video database VDB without using the communication network NW. In the following, description is given of the former computer system configuration. Further, the computers of the first and second systems have substantially similar configurations to those in the preceding embodiments, and overlapping description of them is omitted herein to avoid redundancy.

Principal portions of the pre-stage processing section 2000 and the editing section 1710 are prepared as computer programs, and such computer programs are stored in a ROM, a hard magnetic disk apparatus, and/or the like and read and executed by the CPU.

The pre-stage processing section 2000 has an attendant information searching function and extracts, when a given search condition d2001 for attendant information is inputted from the inputting section Ipt, attendant information d0103 from the video database VDB and performs a search based on the search condition d2001 to determine attendant information which satisfies the condition. Then, the pre-stage processing section 2000 sends the determined attendant information d2004 to the video database VDB through the communication network NW, reads in pertaining video data d1705 extracted from the video database VDB through the communication network NW, and sends the video data d1705 as presentation video data d1706 to the video monitor 0131 so that the presentation video data d1706 is displayed on the screen of the video monitor 0131.

The editing section 1710 has a substantially similar configuration and operates in a substantially similar manner to that in the preceding embodiments. Also the video database VDB is substantially similar to that in the preceding embodiments. Therefore, overlapping description of them is omitted herein to avoid redundancy.

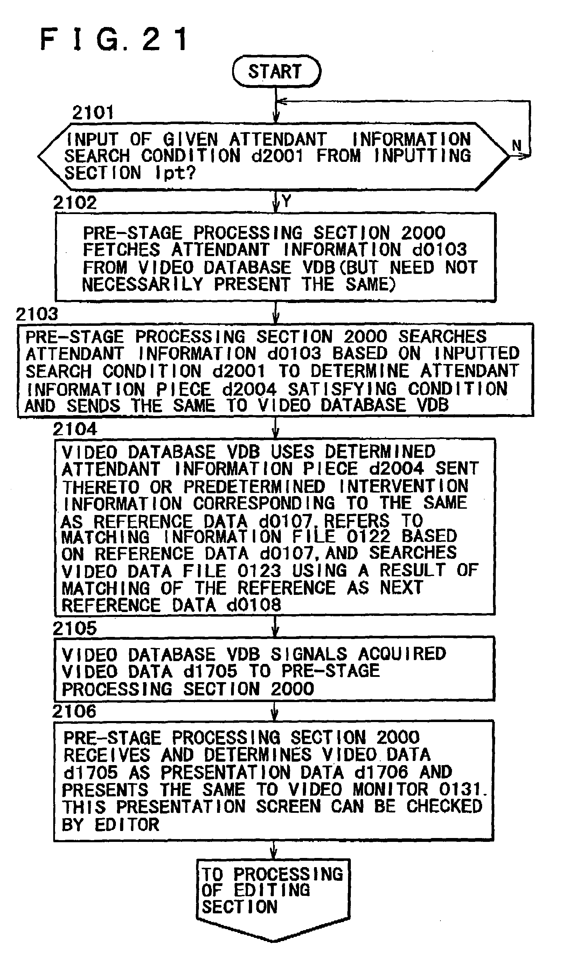

FIG. 21 illustrates operation of the video data editing system VDES2 described above with reference to FIG. 20. In the following, operation of the video data editing system VDES2 is described with reference to FIG. 21.

When a given attendant information search condition d2001 is inputted from the inputting section Ipt to the pre-stage processing section 2000 at step 2101, the pre-stage processing section 2000 fetches the attendant information d0103 from the video database VDB. However, the attendant information d0103 need not necessarily be displayed on the screen.

At step 2103, the pre-stage processing section 2000 searches the attendant information d0103 based on the inputted attendant information search condition d2001 to determine a determined attendant information d2004, which satisfies the condition, and sends the determined attendant information d2004 to the video database VDB.

At step 2104, the video database VDB determines the received determined attendant information d2004 or predetermined intervention information corresponding to the determined attendant information d2004 as reference data d0107 and refers to the matching information file 0122 based on the reference data d0107. Then, the video database VDB determines a result of matching of the reference as next reference data d0108 and refers to the video data file 0123 based on the reference data d0108.

At step 2105, the video database VDB signals the video data d1705 obtained as described above to the pre-stage processing section 2000.

At step 2106, the pre-stage processing section 2000 receiving the video data d1705 determines the video data d1705 as presentation video data d1706 and presents the presentation video data d1706 to the video monitor 0131. The screen thus presented can be checked by the editor. Later editing operation is similar to that described hereinabove with reference to FIG. 19, and therefore, overlapping description thereof is omitted herein to avoid redundancy.

As described above, pre-stage selection is executed by a search of attendant information based on a given search condition to determine an object attendant information, and then matching information is referred to based on the thus determined attendant information to extract pertaining video data to be presented. Consequently, when video data are cut out to form a video clip, pre-stage screening can be executed automatically and efficiently through a search of attendant information and candidates can be narrowed down by the screening. Consequently, an object scene can be reached rapidly and efficiently. Besides, since there is no necessity to open the video data until after the screening comes to an end, such significant effects that the productivity in editing is improved and that the cost is reduced can be achieved.

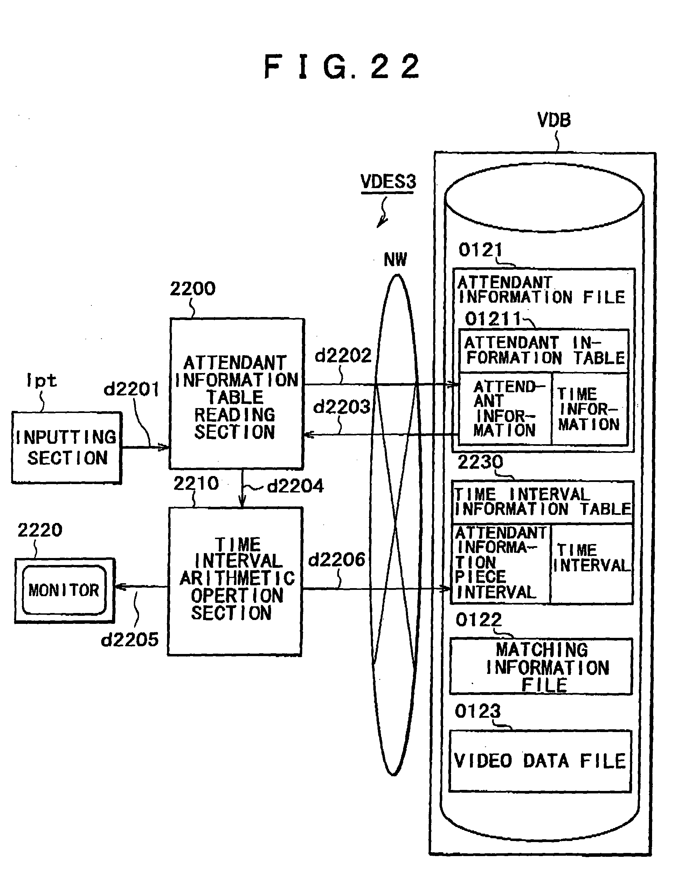

FIG. 22 shows a block configuration of a further video data editing system to which the present invention is applied. In the following, the configuration of the video data editing system of the present embodiment is described with reference to FIG. 22. Also the video data editing system of the present embodiment includes several common components to those of the preceding embodiments described hereinabove.

The video data editing system VDES3 of the present embodiment is formed as a computer system which includes an attendant information table reading section 2200, a time interval arithmetic operation section 2210, a monitor 2220, an inputting section Ipt, a communication network NW, and a video database VDB.

More particularly, the video data editing system VDES3 is formed as a computer system which includes a computer (for example, a work station or a personal computer) of a first system which in turn includes the attendant information table reading section 2200, time interval arithmetic operation section 2210, monitor 2220, and inputting section Ipt and further includes a controller not shown for controlling operation of the components of the first system computer; another computer (for example, a main frame) which accommodates a large capacity recording apparatus and forms the video database VDB; and the communication network NW for relaying data communication between the computers of the first and second systems.

Alternatively, a single computer may be used to implement functions of the components included in the first system computer and the video database VDB without using the communication network NW. In the following, description is given of the former computer system configuration. Further, the computers of the first and second systems have substantially similar configurations to those in the preceding embodiments, and overlapping description of them is omitted herein to avoid redundancy.

The attendant information table reading section 2200 and time interval arithmetic operation section 2210 are prepared as computer programs, and such computer programs are stored in a ROM, a hard magnetic disk apparatus, and/or the like and read and executed by the CPU.

The attendant information table reading section 2200 sends, when a time interval outputting instruction d2201 is inputted thereto from the inputting section Ipt, an attendant information table reading command d2202 to the video database VDB, reads in an attendant information table 01211 recorded in the video database VDB from the video database VDB as data d2203 and sends the data d2203 as data d2204 to the time interval arithmetic operation section 2210.

The time interval arithmetic operation section 2210 receives the data d2204 of the attendant information table from the attendant information table reading section 2200 and arithmetically operates time interval data. In particular, where a plurality of attendant information (hereinafter referred to as items) are involved, the time interval arithmetic operation section 2210 arithmetically operates a time interval from a certain attendant information to next attendant information based on time information and displays the time interval as time interval information d2205 on the monitor 2220 or/and signals the time information as time interval information d2206 to the video database VDB so that the time interval information d2206 is recorded into a time interval table 2230. The time interval table 2230 describes such items as mentioned hereinabove and time interval data of the items therein.

The video database VDB is substantially similar to that in the preceding embodiments except that it includes the time interval table 2230, and description of common components is omitted herein to avoid redundancy.

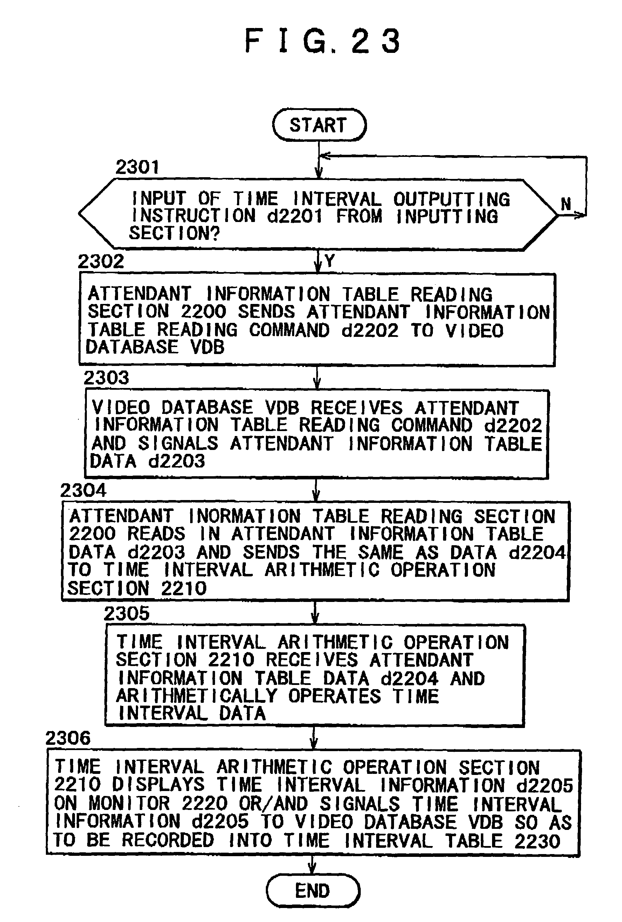

FIG. 23 illustrates operation of the video data editing system VDES3 described above with reference to FIG. 22, In the following, operation of the video data editing system VDES3 is described with reference to FIG. 23.

At step 2301, it is confirmed whether or not an instruction input of a time interval outputting instruction d2201 is received from the inputting section Ipt. If such an input is received, then the attendant information table reading section 2200 sends an attendant information table reading command d2202 to the video database VDB at step 2302.

At step 2303, the video database VDB receives the command d2202 and signals attendant information table data d2203.

At step 2304, the attendant information table reading section 2200 reads in the attendant information table data d2203 and sends the attendant information table data d2203 as data d2204 to the time interval arithmetic operation section 2210.

At step 2305, the time interval arithmetic operation section 2210 receives the attendant information table data d2204 and arithmetically operates time interval data.

At step 2306, the time interval arithmetic operation section 2210 displays the time interval data d2205 on the monitor 2220 or/and signals the time interval data d2205 to the video database VDB so that the time interval data d2205 is recorded into the time interval table 2230. Later editing operation is substantially similar to that in the preceding embodiments, and overlapping description thereof is omitted herein to avoid redundancy.

The time interval table 2230 is referred to upon editing so that, based on the magnitude of the time interval from a certain attendant information to another attendant information which occurs subsequently, estimation of contents generated within the time interval is facilitated.

For example, in a relay of a baseball game, where attendant information is generated after each change in count (strike or ball), since, when the game is proceeding normally, the change in count generally occurs after lapse of an average period of time, also the time interval between a certain attendant information and next attendant information generally exhibits an average period of time. However, if a particularly long interval of time appears between adjacent attendant information, then if this is checked upon utilization, then it can be estimated that some abnormal event in the game (for example, changing of the pitcher, interruption by rain, or interruption by occurrence of an affair such as a protest to the umpire for a long period of time or a confused fight) has occurred. This is effective in later utilization, particularly in an editing operation.

It is to be noted that the configuration relating to a time interval described above can naturally be applied not only to such a video data editing system as described above but also to all systems including the video data searching systems of the embodiments described hereinabove.

Further, where the data recording medium in the embodiments described hereinabove is formed from a hard magnetic disk, a magneto-optical disk, an optical disk, a semiconductor memory, or the like of the non-removable type, management of attendant information and video data is facilitated, a process for matching the attendant information and the video data with each other is simplified, and otherwise possible loss of them can be prevented.

In addition, databases of various configurations can be constructed by applying various types of recording media.

On the other hand, where the data recording medium is formed from a hard magnetic disk, a magneto-optical disk, an optical disk, a semiconductor memory, a magnetic tape, or the like of the removable type or from a combination of such a non-removable data recording medium or media and such a removable data recording medium or media, video data or/and attendant information can be managed separately. Besides, since a wide variety of different recording media can be applied, the degree of freedom in product design increases.

It is to be noted that such video file, attendant information file, attendant information table, matching information file, time management table, link table, and so forth as described above need not necessarily be stored on the same data recording medium, but otherwise may be recorded or stored discretely on a plurality of different types of recording media such as disk-type and tape-type recording media. For example, it is possible to store a video file into a cart system by a VTR or a RAID system by a disk-type recording medium and store the other files and/or tables onto a hard magnetic disk provided in a server apparatus provided separately. Also some other configurations are possible.

Further description is given below of the attendant information.

As one of forms of recording of the attendant information, it is possible to record the attendant information as significance adapted information by a character representation based on a character train. Since this configuration allows inputting by a character representation when attendant information is inputted by an inputting operation, an operation for preparations of attendant information can be performed readily, the frequency in occurrence of an erroneous input decreases when compared with that by inputting, for example, only of numerical values, and the convenience in use is improved advantageously. Further, the accuracy in search upon utilization of the recorded data can be improved.

As another form of recording of the attendant information, the recording section is configured so as to record attendant information as order adapted type information by a numerical representation wherein the numerical value increases monotonously as the time passes.

The order of recording of video data when a video stream is recorded continuously is an order based on the time or the elapsed time, and the video data are recorded in order without involving a reversal in terms of the time of occurrence or the elapsed time. In this connection, not only to a linear type recording apparatus that uses a tape magnetic recording medium onto which data are recorded sequentially but also to a non-linear type recording apparatus that uses a disk type recording medium or a semiconductor memory, which allows random accessing thereto, continuous recording is performed preferably in order to reduce the overhead required for positioning processing arithmetic operation and so forth. This is referred to as "order adapted type" in the present specification.

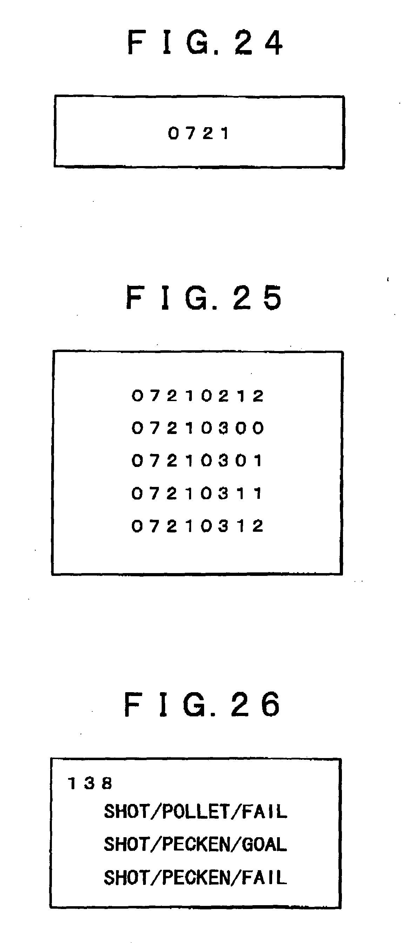

Accordingly, also guide information generated incidentally to video data, that is, attendant information, is information of the order adapted type. Therefore, in the present embodiment, guide information is represented in a numerical value representation wherein the numerical value increases monotonously as the time elapses. For example, taking a baseball game as an example, the score data are represented with numerical values, which increase monotonously. FIG. 24 illustrates an example of order adapted type information by a numerical value representation of such score data as just mentioned.

In a baseball game, the transition of the inning for offence and defense is irreversible, and the first half (top) and the second half (bottom) of a certain inning appear in this order without fail and are irreversible. In other words, the innings are not reversed nor played again at all, and the first half and the second half of the game does not proceed reversely at all. This similarly applies also to the out count, and returning from the two out to the one out does not occur at all. Further, events occur stepwise, and the first half and the second half underlie a layer of the inning, and an out count underlies the layer of the first half and the second half.

Where the hierarchical structure just described is represented as an order adapted type representation, if the one out in the bottom of the seventh inning is represented, by arranging numerals in the order of the hierarchical layers, as
"07/2/1"
where the first half and the second half are represented by 1 and 2, respectively. In this instance, the numerical value to be applied to the second half is represented so as to be greater than the numerical value to be applied to the first half. Further, the slash mark (/) is added for the convenience of description, and actual guide information is represented as a numerical value of four figures (in the case of the decimal notation) with the slash marks removed as seen in FIG. 24.

As a result, each guide information is represented by a numerical value, which increases monotonously in order of appearance, and besides, a particular figure in the numerical value represents also contents of the game. Accordingly, for example, if an inning or the first half or the second half of an inning to be noticed is designated upon utilization of the recorded data, then a search and indexing of the guide information can be performed very rapidly, efficiently, and numerically based on the monotonously increasing characteristic.

Incidentally, where the strike and the out are added as numerical values in a lower hierarchical layer in the case described above, it sometimes occurs that, for example, a batter gets to first base on a hit with the count of two balls, one strike with one out in the bottom of the seventh inning, upon batting of the next batter, and the same count appears with that of the preceding batter. Further, the guide information possibly indicates some numerical reversal. In particular, if the guide information representing the count of the preceding batter is
"07/2/1/1/2",
the guide information representing the count of the next batter begins with
"07/2/1/00",
the count becomes
"07/2/1/1/2"
same as the count of the preceding batter, and the numerical value of the guide information does not increase monotonously.

Thus, in the present embodiment, a layer of the number of batters is inserted between the layer of the out count and the layer of the ball/strike. FIG. 25 illustrates examples of such order adapted type information by such an expanded numerical representation of score data as just described.

Where the expanded numerical expression is used, if the count of the second batter is two balls, one strike, then the guide information is given as a numerical value of eight figures (in the case of the decimal notation) of
"07/2/1/02/1/2",
and the count of the third batter is two balls, one strike, then the guide information is
"07/2/1/03/1/2"

Thus, where the guide information is handled as a numerical value, the monotonously increasing characteristic can be maintained while eliminating reversal of numerical values or appearance of the same numerical value in the guide information. In this manner, the present embodiment allows a reasonable configuration of attendant information by a combination of the irreversibility of proceeding during a game and the monotonously increasing characteristic of the numerical value.

As a further form, the recording section forms guide information from a combination of a rough classification representation and a fine classification representation, and records the rough classification representation as order adapted type information by a numerical representation wherein the numerical value increases monotonously as the time passes but records the fine classification representation as significance adapted type information by a character representation based on a character string.

By the configuration just described, upon utilization of the recorded data, a rough search can be executed efficiently by a search of rough classification representations of the guide information first, and then another search with a higher degree of accuracy can be performed by a search of fine classification representations. Consequently, the search efficiency and the search accuracy can be improved as a whole.

For example, in recording of a soccer game, for a representation of a rough classification of guide information for 45 minutes of the first half and 45 minutes of the second half, a numerical representation wherein the numerical value increases monotonously each time a unit of one minute passes is used. Then, in a lower layer of each numerical value of the rough representation formed in a unit of one minute, a player who has shot is represented in a character string as a fine classification representation. FIG. 26 illustrates an example of guide information by order adapted type information by a numerical value representation and by significance adapted type information by a character representation as just described.

As seen in FIG. 26, one minute (whose numerical value is 38) from 38 minutes to 39 minutes of the first half (whose numerical value is 1) is represented by a numerical value, and shots within the one minute are each represented in a character string together with its player in order of the occurrence.

By recording attendant information using both of a representation of a rough classification and another representation of a fine classification in this manner, upon utilization of the recorded data, a rough classification search of the guide information corresponding to a noticed time is performed at a high speed, and then a fine search and indexing of a shot can be performed based on a fine classification representation.

As described above, according to the gist of the present invention, while, during recording of a material for gathering data (for example, an image and/or sound in relay or a live coverage of a sports game, attendant information (for example, count data or score book data as the score) is generated as information relating to the game, paying attention to the fact that the attendant information is generated and updated as the time passes similarly to the material, video data recorded in a matched relationship with the attendant information are used and the attendant information is utilized as guide data for the material for gathering data and further as bookmarks thereby to realize efficient editing and search.

In other words, eliminating such "memorandum" by manual operation and reference to it during and after recording of, for example, a sports game, as have been performed conventionally in an editing and storing operation of a material for gathering data, a video database produced by generating attendant information by manual operation during or after recording of a live coverage and recording the attendant information and real-time time codes in a linked relationship through intervention of real-time data of the game with regard to which the time or the elapsed time is recorded is used to achieve improvement of the efficiency in search and editing operations and the facility in search.

While preferred embodiments of the invention have been described using specific terms, such description is for illustrative purposes only, and it is to be understood that changes and variations may be made without departing from the spirit or scope of the following claims.

## Claims

1. A video data editing method for editing video data which are data of an image with sound or at least one of the image and the sound which change as the time passes, the image being at least one of a moving picture and a still picture, comprising the steps of:
extracting, using a video database wherein the video data, attendant information to the video data which changes in parallel to the video data, and matching information for matching the video data and the attendant information with each other are recorded on a data recording medium, when an arbitrary one of the attendant information recorded in said video database is designated, the pertaining video data from said video database based on the designated attendant information and the matching information and presenting the extracted video data; and
executing, when a cutout point for the presented video data is designated, at least one of a process of cutting out the video data to form a video clip at a point of time when the cutout point is designated, an other process of recording the cutout point as clip information into said video database or an other data recording medium, and a further process of supplying the cutout point as clip information to the outside.

2. A video data editing method for editing video data which are data of an image with sound or at least one of the image and the sound which change as the time passes, the image being at least one of a moving picture and a still picture, comprising the steps of:
executing, using a video database wherein the video data, attendant information to the video data which changes in parallel to the video data, and matching information for matching the video data and the attendant information with each other are recorded on a data recording medium, pre-stage selection based on a given search condition from within the attendant information recorded in said video database to determine an object attendant information;
extracting the pertaining video data from said video database based on the determined attendant information and the matching information and presenting the extracted video data; and
executing, when a cutout point for the presented video data is designated, one of a process of cutting out the video data to form a video clip at a point of time when the cutout point is designated, an other process of recording the cutout point as clip information into said video database or an other data recording medium, and a further process of supplying the cutout point as clip information to the outside.

3. A video data editing method according to claim 1 or 2, wherein the matching information of said video database comprises:
first matching information for matching the video data directly or indirectly with first time information which is based on an arbitrary first time base;
second matching information for matching the attendant information with second time information which is based on an arbitrary second time base; and
third matching information representative of matching between the first time base and the second time base or between the first time information and the second time information.

4. A video data editing method according to claim 1 or 2, wherein the matching information of said video database comprises:
first matching information for matching the video data directly or indirectly with common time information, which is time information based on an arbitrary common time base; and
second matching information for matching the attendant information with the common time information.

5. A video data editing method according to claim 1 or 2, wherein the attendant information comprises a plurality of information, and an interval of time from a certain one to a next one of the attendant information is arithmetically operated and one of recording or presentation is performed.

6. A video data editing method according to claim 1 or 2, wherein the attendant information is order adapted type information by a numerical expression wherein the numerical value increases as the time passes.

7. A video data editing method according to claim1 or 2, wherein the attendant information is significance adapted type information by a character representation based on a character train.

8. A video data editing method according to claim 1 or 2, wherein the attendant information is formed from a combination of a rough classification representation and a fine classification representation, and the rough classification representation is order adapted type information by a numerical expression wherein the numerical value increases as the time passes while the fine classification representation is significance adapted type information by a character representation based on a character train.

9. A video data editing system for editing video data which are data of an image with sound or at least one of the image and the sound which change as the time passes, the image being at least one of a moving picture and a still picture, comprising:
a video database section wherein the video data, attendant information to the video data which changes in parallel to the video data, and matching information for matching the video data and the attendant information with each other are recorded on a data recording medium;
pre-stage processing means for extracting, when an arbitrary one or the attendant information recorded in said video database section is designated, the pertaining video data from said video database section based on the designated attendant information and the matching information and presenting the extracted video data; and
editing means for executing, when a cutout point for the presented video data is designated, at least one of a process of cutting out the video data to form a video clip at a point of time when the cutout point is designated, an other process of recording the cutout point as clip information into said video database section or an other data recording medium, and a further process of supplying the cutout point as clip information to the outside.

10. A video data editing system for editing video data which are data of an image with sound or at least one of the image and the sound which change as the time passes, the image being at least one of a moving picture and a still picture, comprising:
a video database section wherein the video data, attendant information to the video data which changes in parallel to the video data, and matching information for matching the video data and the attendant information with each other are recorded on a data recording medium;
pre-stage processing means for executing pre-stage selection based on a given search condition from within the attendant information recorded in said video database section to determine an object attendant information, extracting the pertaining video data from said video database section based on the determined attendant information and the matching information and presenting the extracted video data; and
editing means for executing, when a cutout point for the presented video data is designated, one of a process of cutting out the video data to form a video clip at a point of time when the cutout point is designated, an other process of recording the cutout point as clip information into said video database section or an other data recording medium, and a further process of supplying the cutout point as clip information to the outside.

11. A video data editing system according to claim 9 or 10, wherein the matching information of said video database section comprises:
first matching information for matching the video data directly or indirectly with first time information which is based on an arbitrary first time base;
second matching information for matching the attendant information with second time information which is based on an arbitrary second time base; and
third matching information representative of matching between the first time base and the second time base or between the first time information and the second time information.

12. A video data editing system according to claim 9 or 10, wherein the matching information of said video database section comprises:
first matching information for matching the video data directly or indirectly with common time information which is time information based on an arbitrary common time base; and
second matching information for matching the attendant information with the common time information.

13. A video data editing system according to claim 9 or 10, wherein the attendant information comprises a plurality of information, and an interval of time from a certain one, to a next one of the attendant information is arithmetically operated and one of recording or presentation is performed.

14. A video data editing system according to claim 9 or 10, wherein the attendant information is order adapted type information by a numerical expression wherein the numerical value increases as the time passes.

15. A video data editing system according to claim 9 or 10, wherein the attendant information is significance adapted type information by a character representation based on a character train.

16. A video data editing system according to claim 9 or 10, wherein the attendant information is formed from a combination of a rough classification representation and a fine classification representation, and the rough classification representation is order adapted type information by a numerical expression wherein the numerical value increases as the time passes while the fine classification representation is significance adapted type information by a character representation based on a character train.
